(19) Europäisches Patentamt
European Patent Office
Office européen des brevets

(11) **EP 2 050 023 B1**

(12) **EUROPÄISCHE PATENTSCHRIFT**

(45) Veröffentlichungstag und Bekanntmachung des Hinweises auf die Patenterteilung:
**08.10.2014 Patentblatt 2014/41**

(21) Anmeldenummer: **07786558.2**

(22) Anmeldetag: **03.08.2007**

(51) Int Cl.:
***G06F 17/30*** ^(2006.01)

(86) Internationale Anmeldenummer:
**PCT/EP2007/006901**

(87) Internationale Veröffentlichungsnummer:
**WO 2008/015020 (07.02.2008 Gazette 2008/06)**

(54) **VERFAHREN ZUM ANALYSIEREN UND/ODER TESTEN ZUMINDEST EINER BENUTZEROBERFLÄCHE, DATENVERARBEITUNGSEINRICHTUNG UND COMPUTERPROGRAMMPRODUKT**

METHOD FOR ANALYZING AND/OR TESTING AT LEAST ONE USER INTERFACE, DATA PROCESSING DEVICE AND COMPUTER PROGRAM PRODUCT

PROCÉDÉ POUR L'ANALYSE ET/OU LE TEST D'AU MOINS UNE SURFACE UTILISATEUR, DISPOSITIF DE TRAITEMENT DE DONNÉES ET PRODUIT DE PROGRAMME INFORMATIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.08.2006 DE 102006036304**

(43) Veröffentlichungstag der Anmeldung:
**22.04.2009 Patentblatt 2009/17**

(73) Patentinhaber: **Karlsruher Institut für Technologie 76131 Karlsruhe (DE)**

(72) Erfinder: **PANKRATIUS, Victor Westford, MA 01886 (US)**

(74) Vertreter: **Müller-Boré & Partner Patentanwälte PartG mbB Friedenheimer Brücke 21 80639 München (DE)**

(56) Entgegenhaltungen:
**EP-A2- 1 569 122     US-A1- 2003 061 283 US-B1- 6 907 546**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 2 050 023 B1**

**Beschreibung**

Die vorliegende Erfindung betrifft ein Verfahren zum Analysieren und/oder Testen zumindest einer Benutzeroberfläche, eine Datenverarbeitungseinrichtung sowie ein Computerprogrammprodukt.

Stand der Technik

Regelmäßig werden für das Internet erstellte HTML-Webseiten von unterschiedlichen Web-Browsern unterschiedlich dargestellt. Dies gilt insbesondere auch dann, wenn der zugrunde liegende HTML-Code vollständig korrekt ist. Trotz Einhaltung der vom W3C festgelegten Standards haben Web-Browsern Freiheiten bei der Darstellung und gegebenenfalls auch verschiedene technische Eigenheiten. Web-Designer müssen daher in der Lage sein, möglichst schnell einen Eindruck davon zu bekommen, wie ihre Seite von verschiedenen Web-Browsern dargestellt und entsprechend von verschiedenen Benutzern gesehen wird. Ein manuelles Testen ist sehr aufwendig, da viele Browser auf verschiedenen Betriebssystemen installiert sein müssen, und eine bestimmte Web-Seite einzeln aufgerufen werden müßte. Zusätzlich können verschiedene mögliche Bildschirmauflösungen und Web-Browser Versionen eine Rolle spielen.

Um eine möglichst einheitliche Darstellung von Web-Seiten zu erhalten, wird herkömmlicherweise eine Analyse des HTML-Quellcodes einer Web-Seite durchgeführt. Hierbei sind verschiedene Tools zur Syntaxüberprüfung beispielsweise über das Internet erhältlich. Hierbei ist jedoch festzustellen, daß eine reine Syntaxüberprüfung des HTML-Codes meist nicht ausreicht, um sicher zu sein, daß eine dadurch beschriebene bzw. definierte Web-Seite in allen gängigen Web-Browsern korrekt dargestellt wird. Insbesondere gestatten die momentan verfügbaren W3C-Standards, Freiheiten bei der Darstellung von HTML, was möglicherweise auch in absehbarer Zukunft so bleiben wird. Ferner haben Web-Browser darüber hinaus oft interne Fehler, die zu Fehldarstellungen von Web-Seiten führen können. Manche Hersteller entschließen sich auch, in ihren eigenen HTML-Erstelluhgswerkzeugen und in ihren Web-Browsern eigene Erweiterungen hinzuzufügen, die nicht standardkonform sind. Somit ist eine Überprüfung einer Web-Seite durch Aufruf in mehreren konkreten Web-Browsern auch bei einer Syntax-Überprüfung des HTML-Codes unverzichtbar.

Dokument US 2003/0061283 A1 offenbart ein Verfahren zum Entwickeln und Testen von WML/HTML Anwendungen, insbesondere Websites, auf einer Vielzahl von User Agents oder Browsern. Der Benutzer wählt die Browser aus. Das Verfahren führt die Website auf den ausgewählten Browsern aus und zeigt auf einem virtuellen Schirm Screenshots der Datei an, wie sie von den verschiedenen Browsern angezeigt werden.

Dokument US 6 907 546 B1 offenbart ein automatisches Test-Tool, das Benutzer-Interaktionen emuliert. In einer Datenbank werden Worte gespeichert, die eine allgemeinverständliche Bedeutung haben. Für jedes dieser Worte sind in der Datenbank ferner zugehörige Computerbefehle gespeichert. Die Computerbefehle können in einem Computer ausgeführt werden, um eine Funktion auszuführen, die der Bedeutung des allgemeinverständlichen Wortes entspricht.

Druckschrift EP 1 569 122 A2 offenbart ein Verfahren zur automatischen Bestimmung von Unterschieden einer Benutzeroberfläche während deren Entwicklung.

Aufgabe der Erfindung

Es ist eine Aufgabe der Erfindung, eine verbesserte und einfachere Prüfung der Darstellung von web-basierten Benutzeroberflächen bereitzustellen. Diese Aufgabe wird gelöst durch das Verfahren gemäß Anspruch 1, die Datenverarbeitungseinrichtung gemäß Anspruch 14 und das Computerprogrammprodukt gemäß Anspruch 15. Bevorzugte Ausführungsformen sind Gegenstand der abhängigen Ansprüche.

Verfahren gemäß einem Aspekt der Erfindung

Ein Aspekt der vorliegenden Erfindung betrifft ein Verfahren zum Analysieren und/oder Testen zumindest einer Benutzeroberfläche; insbesondere einer web-basierten Benutzeroberfläche mit den Schritten:

- Übermitteln einer Adresse zumindest einer Benutzeroberfläche, insbesondere einer web-basierten Benutzeroberfläche und/oder des Quellcodes mitsamt der zugehörigen graphischen Elemente zumindest einer Benutzeroberfläche, insbesondere einer web-basierten Benutzeroberfläche an eine Auswertungsvorrichtung;

- Übermitteln der Adresse der zumindest einen Benutzeroberfläche und/oder des Quellcodes mitsamt der zugehörigen graphischen Elemente der zumindest einen Benutzeroberfläche an zumindest zwei unterschiedlich konfigurierte Darstellungsvorrichtungen;

- Generieren zumindest eines Pixelbildes der Benutzeroberfläche auf jeder Darstellungsvorrichtung;

- Übermitteln eines jeden generierten Pixelbildes an die Auswertungsvorrichtung;

- automatisches Ermitteln und/oder Darstellen zumindest eines Unterschieds zwischen den generierten Pixelbildern der zumindest einen Benutzeroberfläche.

Folglich kann vorteilhafterweise für eine gegebene Benutzeroberfläche, insbesondere eine gegebene Web-Seite (bevorzugt automatisiert) überprüft werden, wie sie in unterschiedlichen Web-Browsern und/oder auf unterschiedlichen Betriebssystemen und/oder mit unterschiedlichen Bildschirmauflösungen dargestellt wird. Die Benutzeroberfläche kann hierbei eine herkömmliche Benutzeroberfläche eines herkömmlichen Programms, insbesondere eine Eingabemaske einer Applikationssoftware sein. Die Benutzeroberfläche kann auch eine Oberfläche in ihrer einfachsten Art sein, insbesondere mit/ohne graphische(n) Elemente(n) und/oder Textelemente(n), wie sie z.B. gewöhnlich während der Startphase eines Computerprogramms dargestellt wird. Alternativ/zusätzlich kann die Benutzeroberfläche auch webbasiert sein, insbesondere eine Webseite sein. Die Benutzeroberfläche kann eine browsermäßig erstellte Benutzeroberfläche sein.

Ferner kann die Benutzeroberfläche eine statisch generierte Benutzeroberfläche oder eine dynamisch generierte Benutzeroberfläche sein. Beispielsweise kann die Benutzeroberfläche eine Webseite sein, die durch einen statischen, d.h. festgelegten HTML-Code erzeugt wird. Die Benutzeroberfläche kann auch eine Webseite sein, die durch einen CGI-Code, einen PHP-code, usw. erzeugt wird und somit variablen Inhalt anzeigen kann.

Insofern sind die nachfolgenden Ausführungen bezüglich der Benutzeroberfläche nicht auf die jeweils gewählte, spezielle Benutzeroberfläche beschränkt, sondern gelten sinngemäß für alle Benutzeroberflächen. In anderen Worten kann in einer Ausführung die Benutzeroberfläche als web-basierte Benutzeroberfläche dargestellt und beschrieben sein, die Ausführungen gelten sinngemäß jedoch auch für beliebige, insbesondere für die vorgenannten Benutzeroberflächen.

Das Pixelbild wird dergestalt erstellt, daß das Pixelbild die Darstellung der Benutzeroberfläche (welche insbesondere eine web-basierte Benutzeroberfläche sein kann) und/oder des Quellcodes mitsamt der zugehörigen graphischen Elemente der web-basierten Benutzeroberfläche wiedergibt, wie sie ein Benutzer sehen würde. In anderen Worten umfaßt das Pixelbild immer genau eine Seite, wie sie einem Benutzer dargestellt wird. In anderen Worten wird genau diejenige Seite dargestellt, auf die die angegebene Adresse verweist. Bevorzugt kann auch angegeben werden, welche der Seiten bzw. welche Darstellung das Pixelbild enthalten soll, falls der Quellcode der web-basierten Benutzeroberfläche eine Vielzahl von Seiten enthält. Regelmäßig ist es so, daß durch auswählen, d.h. aufgrund von Links einer web-basierten Benutzeroberfläche, insbesondere einer Web-Seite, eine weitere Seite geöffnet bzw. dargestellt wird. Insbesondere kann es möglich sein, daß im HTML Quellcode einer Seite X Links bzw. Referenzen auf andere HTML Seiten Y, Z enthalten sind, der HTML Quellcode der Seiten Y, Z ist jedoch in der Seite X nicht enthalten. Beispielsweise könnte es möglich sein, vorzugsweise detailliert zu spezifizieren, welche Seite in dem Pixelbild dargestellt werden soll. Alternativ kann auch lediglich der Quellcode genau einer Seite der web-basierten Benutzeroberfläche an die Auswertungsvorrichtung übergeben werden. Ebenso kann die exakte Adresse der web-basierten Benutzeroberfläche übergeben werden, welche genau auf eine Seite verweist.

Der Begriff "unterschiedlich konfiguriert" wird vorzugsweise derart verwendet, daß auf zwei unterschiedlich konfigurierten Darstellungsvorrichtungen verschiedene Betriebssysteme installiert sind bzw. laufen und/oder auf den unterschiedlich konfigurierten Darstellungsvorrichtungen verschiedene Software-Programme, beispielsweise verschiedene Web-Browser installiert sind bzw. laufen. Unterschiedlich konfiguriert umfaßt beispielsweise auch, daß eine Darstellungsvorrichtung ein PC, ein Servercomputer, ein Clientcomputer, ein Terminalcomputer, eine Workstation, ein Mobiltelefon, ein PDA, ein Notebook, etc. ist. Die andere Darstellungseinrichtung kann ebenfalls ein PC, ein Servercomputer, ein Clientcomputer, ein Terminalcomputer, eine Workstation, ein Mobiltelefon, ein PDA, ein Notebook, etc. sein.

Der Begriff "Web-Browser" und "Browser" werden synonym angewandt. Ein Web-Browser oder allgemein als Browser bezeichnet oder abgekürzt ist ein Computerprogramm zum Anzeigen von Maschinensprache, insbesondere zum Anzeigen bzw. Betrachten von Webseiten, deren Quellcode insbesondere in HTML angefertigt ist. Eine Maschinensprache kann beispielsweise eine herkömmliche Programmiersprache sein. Im allgemeinen ist ein Browser ein spezielles Computerprogramm, mit demn sich insbesondere Textdateien darstellen lassen. Neben auf HTML Quellcode basierenden Seiten kann es auch möglich sein, daß ein Browser auch Seiten aus anderem Quellcode bzw. andere/verschiedene Arten von Dokumenten, insbesondere mit grafischen Elementen, darstellen kann. Hierbei kann ein Browser beispielsweise ausgelegt sein, aufeinanderfolgende Seiten aufzurufen und anzuzeigen, wobei die einzelnen Seiten mit einander verlinkt sein können.

Ferner kann es möglich sein, daß ein Browser verschiedene Medien abspielen kann, Musikdateien, Videodateien, etc..

Ferner kann es möglich sein, daß ein Browser geeignet ist, Programme und/oder Dateien auf einem Computer zu speichern. Hierbei ist es regelmäßig unerläßlich, graphische Elemente in die entsprechende Webseite einzubetten, um das Speichern zu ermöglichen, wobei es nicht immer notwendig ist, daß diese Elemente graphischer Natur sind. Beispielsweise kann ein solches Element ein Text-Link sein, der eine URL einer bestimmten Datei enthält.

Weiterhin kann ein Browser bzw. ein Web-Browser eine Vielzahl von weiteren Funktionen aufweisen. So kann ein Browser ein oder mehrere Protokolle wie FTP, Gopher, usw. unterstützen. Einige Browser haben auch Funktionen für email, wobei einige andere Browser diese Funktionen durch externe Programme abdecken.

Weiterhin vorteilhafterweise werden erfindungsgemäß unzureichende Ergebnisse, wie sie beispielsweise anhand einer herkömmlichen Überprüfung von HTML-Code erzeugt werden, vermieden. Vielmehr kann einem Web-Designer in einfacher Weise vermittelt werden, wie eine Web-Seite in bestimmten, verschiedenen Browsern konkret aussieht, wobei ein großer manueller Aufwand wie dies derzeit herkömmlich notwendig ist, vermieden wird. Insbesondere können vorteilhafterweise Web-Seiten gleichzeitig auf mehreren Systemen überprüft und dargestellt werden, wobei die Auswertung der Überprüfung automatisiert ist. Folglich kann ein Web-Designer Auswertungsergebnisse in kürzerer Zeit als herkömmlich notwendig erhalten.

Erfindungsgemäß kann eine Auswertungsvorrichtung insbesondere ein Computer, ein Computerserver, ein Netzwerkcomputer, eine Workstation, ein Clientcomputer usw., sein bzw. umfassen.

Ebenso kann jede Darstellungsvorrichtung insbesondere ein Computer, ein Computerserver, ein Netzwerkcomputer, eine Workstation, ein Clientcomputer usw., sein bzw. umfassen, wobei die Darstellungsvorrichtungen voneinander verschieden sein können. Beispielsweise kann eine Darstellungsvorrichtung ein Computerserver sein und eine weitere Darstellungsvorrichtung eine Workstation.

Der Begriff "Pixelbild" im Sinne dieser Erfindung wird gleichbedeutend mit "Screenshot" bzw. "Bildschirmfoto" verwendet.

Ein Screenshot bzw. ein Bildschirmfoto kann das in der Datenverarbeitung herkömmlich durchgeführte Abspeichern eines aktuellen grafischen Bildschirminhalts insbesondere in eine Datei, welche eine herkömmliche Grafikdatei, beispielsweise eine herkömmliche jpg, gif, tiff png Datei oder auch eine pdf Datei usw. sein kann. Insbesondere kann ein Screenshot eine Rastergrafik sein, welche beispielsweise nicht nur in einer Datei gespeichert sein kann, sondern in einer Zwischenablage oder die direkt über ein Peripheriegerät, wie z.B. einen Computerdrucker, ausgegeben werden kann.

Insbesondere ist es möglich, ein Abbild des kompletten Bildschirms in einer Datei zu speichern bzw. auszugeben und/oder das gerade aktive Fenster als Grafik zu speichern oder auszugeben. Gemäß einer bevorzugten Ausführung der Erfindung ist es auch möglich, daß auch nicht sichtbare Bereiche der web-basierten Oberfläche zum Erzeugen des Pixelbildes herangezogen werden. Dies kann insbesondere der Fall sein, wenn die web-basierte Oberfläche, d.h. insbesondere die Webseite, größer ist, als sie auf einem Bildschirm dargestellt werden kann und entsprechend bei der Bildschirmdarstellung gescrollt werden müßte. In anderen Worten kann gemäß dieser bevorzugten Ausführungsform der Erfindung das scrollen automatisch durchgeführt werden.

In anderen Worten ist ein Pixelbild bzw. ein Screenshot eine Graphikdatei, in welcher eine web-basierte Benutzeroberfläche bzw. eine Web-Seite abgebildet wird, wie sie auf einem Computermonitor für den gegebenen Web-Browser, das gegebenen Betriebssystem und der gegebenen Bildschirmauflösung dargestellt wird. Der Begriff "Bild" wird auch synonym mit "Pixelbild" verwendet

Ein Pixelbild bzw. ein digitales Bild bzw. ein Screenshot im Sinne dieser Erfindung ist insbesondere im Prinzip eine Pixelmatrix mit Breite M und Höhe N und enthält folglich M*N Pixel. Ein einzelnes Pixel besteht hierbei im RGB-Farbmodell, welches vorzugsweise Anwendung findet, aus drei Zahlenwerten zwischen 0 und 255, die im Rechner als Bytes dargestellt werden. Jede Komponente enthält für ein bestimmtes Pixel den Rot-, Grün- und Blau-Anteil (als R-, G-, B-Anteil abgekürzt) der Farbe, des betreffenden Pixels. Beispielsweise hat ein rotes Pixel die Werte R: 255, G: 0 ,B: 0, ein gelbes Pixel R: 255, G: 255, B: 0. Die Farbe eines Pixels kann als Vektor aufgefaßt werden: Alternativ zu der zu der Bezeichnung M*N Pixel kann auch die Bezeichnung M x N Pixel angewandt werden.

Die obige Beschreibung ist nicht auf das RGB-Farbmodell beschränkt, welches insbesondere als beispielhaftes Farbmodell beschrieben wurde. Alternativ könnten auch andere Farbmodelle eingesetzt bzw. verwendet werden, wie z.B. das herkömmliche CMYK-Farbmodell, das herkömmliche CMY-Farbmodell, das herkömmliche HSB-Farbmodell, das herkömmliche HLS-Farbmodell, das herkömmliche YIQ/YUY-Farbmodell und/oder das herkömmliche Lab-Farbmodell.

Wie bereits ausgeführt, wird ein im wesentlichen vollständiges Abbild, d.h. Pixelbild der web-basierten Benutzeroberfläche erstellt. In anderen Worten wird ein Screenshot einer Webseite erstellt, wobei alle Elemente der Webseite enthalten sind, wie sie einem Benutzer unter dem gegebene Betriebssystem, bei Verwendung des gegebenen Web-Browsers und der angegebenen bzw. gewählten Auflösung dargestellt wird. Insbesondere ist das Pixelbild nicht auf Teile bzw. Bereiche dieser Darstellung eingeschränkt.

Zum Ermitteln und/oder Darstellen des Unterschieds der Pixelbilder für das Pixelbild wird zumindest eine Kennzahl ermittelt und die zumindest eine Kennzahl eines jeden Pixelbildes mit der zumindest einen Kennzahl des bzw. der weiteren Pixelbildes bzw. Pixelbilder verglichen.

In anderen Worten kann automatisch für jede Darstellung einer web-basierten Benutzeroberfläche zumindest ein Parameter generiert werden, wobei der Parameter insbesondere anhand der Auswertungsvorrichtung generiert wird und diese Parameter in einfacher Weise, insbesondere maschinell miteinander verglichen werden.

Bevorzugte Ausführungsformen des Verfahrens Vorzugsweise umfaßt das Verfahren die Schritte:

-   Erzeugen eines jeden Pixelbildes als Graustufenbild mit M*N Pixeln, wobei für jeden Pixel der Wert der Graustufe zwischen 0 und 255 beträgt;

-   Erzeugen eines Grauwerthistogramms $H = (x_0, x_1, ..., x_{255})$ für jedes Pixelbild, wobei der Wert eines jeden Eintrags $x_i$ des Grauwerthistogramms angibt, wie viele Pixel mit dem Grauwert i in jeweiligen Pixelbild vorhanden sind;

-   Berechnen eines relativen Grauwerthistogramms $h = (y_0, y_1, ..., y_{255}) = H / (M*N)$ für jedes Pixelbild;

-   Berechnen einer Entropie $E = -\sum_{i=0}^{255} y_i * \log_2 y_i$ für jedes Pixelbild

-   Ausgeben zumindest einer Ausgabevariable in Abhängigkeit der Entropie eines jeden Pixelbildes.

Anstelle in Abhängigkeit von der Variablen $y_i$ kann die Entropie E auch in Abhängigkeit der Variable $p_i$ angegeben werden, d.h. $E = -\sum_{i=0}^{255} p_i * \log_2 p_i$ , wobei $p_i$ die Wahrscheinlichkeit ist, mit der ein bestimmter Grauwert im relativen Grauwerthistogramm h auftritt.

Gemäß dieser bevorzugten Ausführungsform der Erfindung wird der Informationsgehalt eines Screenshots, d.h. eines Pixelbildes gemessen. Hierbei ist die grundlegende Idee, daß Screenshots mit einem unterschiedlichen Informationsgehalt Abweichungen in der Darstellung haben müssen.

Um die Ausgabevariable zu ermitteln, wird vorzugsweise zunächst ein Screenshot, welcher bevorzugt in R-, G-, B Farben dargestellt ist, in ein Graustufenbild umgewandelt, d.h. in ein Bild, das nur Grauwerte enthält. Ein Pixel dieses Graustufenbilds ist eine Zahl zwischen 0, d.h. Schwarz, und 255, d.h. Weiß. Zu dem Graustufenbild wird ein Histogramm H gleich $(X_0, ..., ..., x_{255})$ erstellt, wobei die i-te Komponente $x_i$ angibt, wieviele Pixel mit der mit dem Grauwert $x_i$ im Graustufenbild vorhanden sind. Das relative Grauwerthistogramm $h = (y_0, y_1,..., y_{255}) = H/(M*N)$ gibt in der i-ten Komponente $y_i$ die Wahrscheinlichkeit an, mit der ein bestimmter Grauwert im Graustufenbild auftritt.

Für einen bestimmten Screenshot, welcher die Auflösung M*N Pixel aufweist, d.h. M Pixel sind entlang einer Kante des Pixelbildes angeordnet und N Pixel sind entlang einer dazu senkrechten Kante des Pixelbildes angeordnet, wird über die Anzahl aller Pixel iteriert. Bei der Iteration über diese Pixel werden die Zahlenwerte der R-, G-, B-Komponenten aller Pixel vorzugsweise auf einen einzigen Zahlenwert verdichtet bzw. reduziert, der bestimmte Eigenschaften des Screenshots charakterisiert. Durch den Vergleich der ermittelten Kennzahlen für verschiedene Screenshots kann ermittelt werden, ob visuelle Abweichungen bestehen, vorteilhafterweise ohne hierbei die Bilder betrachten zu müssen. Gibt es beispielsweise keine Abweichung, d.h. alle Web-Browser stellen die web-basierte Benutzeroberfläche bzw. die Seite der web-basierten Benutzeroberfläche identisch dar, sind auch die Kennzahlen identisch. Insbesondere kann der Vergleich auch automatisiert werden, wobei durch Definition geeigneter Schwellwerte als Akzeptanzschwelle die Kennzahl(en) derart ausgenutzt werden kann bzw. können, daß automatisch festgestellt werden kann, wann eine Abweichung als relevant betrachtet wird.

Die Entropie ist hierbei vorzugsweise eine Größe, wie sie ursprünglich in der Thermodynamik verwendet wird, wobei die Entropie auch als Maß für Informationsgehalt verwendet werden kann. Wenn gemäß der bevorzugten Ausführungsform der Erfindung Screenshots durch unterschiedliche Web-Browser unterschiedlich dargestellt und beispielsweise einige Bereiche, wie z.B. Tabellen, Bilder, Knöpfe, usw., gestreckt oder gestaucht werden, verändert sich in vielen Fällen die Verteilung der Grauwerte einzelner Pixel im relativen Grauwerthistogramm. Die Berechnung der Entropie verdichtet vorteilhafterweise alle Zahlen des Grauwerthistogramm bzw. des relativen Grauwerthistogramms auf eine einzige Kennzahl, wobei anhand dieser Kennzahl Unterschiede in den Darstellungen der web-basierten Benutzeroberfläche bzw. des Pixelbildes bzw. Screenshots identifizierbar sind.

Alternativ kann gemäß weiterer bevorzugter Ausführungsformen der Erfindung eine Kennzahl beispielsweise unter Bildung eines Mittelwerts, einer Standardabweichung, eines Variationskoeffizienten, usw. aus einem oder mehreren Histogrammen gewonnen werden. Der Variationskoeffizient, welcher ein Koeffizient aus Standardabweichung und Mittelwert ist, kann beispielsweise verwendet werden, um Histogramme unterschiedlicher Screenshots zu vergleichen.

Vorzugsweise können die Kennzahlen anhand einer Fourier-Analyse und/oder einer Wavelet-Analyse erzeugt werden.

Weiterhin vorzugsweise umfaßt das Verfahren die Schritte:

-   Erzeugen eines jeden Pixelbildes mit M*N Pixeln, wobei für jeden Pixel der Farbwert einer jeden der Farben Rot, Grün und Blau zwischen 0 und 255 beträgt;

- Erzeugen zumindest eines Farbwerthistogramms $H_j = (x_{j0}, x_{j1}, ..., x_{j255})$ für eine Farbe der Farben Rot, Grün und Blau für jedes Pixelbild, wobei der Wert eines jeden Eintrags $x_{ji}$ des Farbwerthistogramms $H_j$ angibt, wie viele Pixel mit dem Farbwert i der entsprechenden Farbe in dem jeweiligen Pixelbild vorhanden sind;

- Berechnen eines relativen Farbwerthistogramms $h_j = (y_{j0}, y_{j1}, ..., y_{j255}) = H_j / (M*N)$ für jedes Pixelbild;

- Berechnen einer Entropie $E_j = -\sum_{i=0}^{255} y_{ji} * \log_2 y_{ji}$ für jedes Pixelbild

- Ausgeben zumindest einer Ausgabevariable in Abhängigkeit der Entropie eines jeden Pixelbildes.

Dementsprechend wurde vorteilhafterweise erkannt, daß die Entropie nicht lediglich anhand von Grauwerten bestimmt bzw. berechnet werden kann, sondern vielmehr auch für farbige Pixelbilder, wobei beispielsweise die Entropie einer jeden Farbe berechnet werden kann. Zusätzlich können weitere mathematische Operationen auf die Entropien der einzelnen Farben angewandt werden.

Weiterhin vorzugsweise wird das Verfahren für zwei oder drei der Farben Rot, Grün und Blau durchgeführt.

Vorzugsweise umfaßt die Ausgabevariable die Entropie E eines jeden Pixelbildes.

In anderen Worten kann die Ausgabevariable einen oder mehrere Parameter umfassen, insbesondere die Entropie E.

Weiterhin vorzugsweise wird die Ausgabevariable anhand der Entropie E eines jeden Pixelbildes erstellt.

Die Ausgabevariable kann folglich auch eine Kombination verschiedener Entropien verschiedener Pixelbilder sein bzw. eine Kombination der Entropien verschiedener Farben eines Pixelbildes, usw.

Weiterhin vorzugsweise umfaßt das Verfahren die Schritte:

- Erzeugen zweier Pixelbilder als Graustufenbilder mit M*N Pixeln, wobei für jeden Pixel der Wert der Graustufe zwischen 0 und 255 beträgt;

- Erzeugen eines ersten Grauwerthistogramms $H = (x_0, x_1, ..., ..., x_{255})$ für das erste Pixelbild, wobei der Wert eines jeden Eintrags $x_i$ des ersten Grauwerthistogramms H angibt, wie viele Pixel mit dem Grauwert i in dem ersten Pixelbild vorhanden sind;

- Erzeugen eines zweiten Grauwerthistogramms $H' = (x'_0, x'_1, ..., x'_{255})$ für das zweite Pixelbild, wobei der Wert eines jeden Eintrags $x'_i$ des zweiten Grauwerthistogramms H' angibt, wie viele Pixel mit dem Grauwert i in dem zweiten Pixelbild vorhanden sind;

- Berechnen einer Differenzvariable D wobei gilt:

$$D = |H - H'| = \sum_{i=0}^{255} |H[i] - H'[i]|;$$

- Kennzeichnen eines Unterschieds, falls D größer als ein vorbestimmter Schwellwert ist, insbesondere, falls D>0.

Die Differenzvariable D kann auch als L1-Distanz bezeichnet werden.

Weiterhin vorzugsweise umfaßt das Verfahren die Schritte

- Erzeugen zweier Pixelbilder, jeweils als Graustufenbild mit M*N Pixeln, wobei für jeden Pixel der Wert der Graustufe zwischen 0 und 255 beträgt;

- Erzeugen eines ersten Histogramms $H = (x_0, x_1, ..., x_{255})$ für das erste Pixelbild, wobei der Wert eines jeden Eintrags $x_i$ des Histogramms H angibt, wie viele Pixel mit dem Grauwert i in dem ersten Pixelbild vorhanden sind;

- Erzeugen eines zweiten Histogramms $H' = (x'_0, x'_1, ..., x'_{255})$ für das zweite Pixelbild, wobei der Wert eines jeden

Eintrags x'$_i$ des Histogramms H' angibt, wie viele Pixel mit dem Grauwert i in dem zweiten Pixelbild vorhanden sind;

- Berechnen einer Differenzvariable D wobei gilt:

$$D = |H - H'| = \sum_{i=0}^{255} \left( \left| H[i] - H'[i] \right| \right)^2 \; ;$$

- Kennzeichnen eines Unterschieds, falls D größer als ein vorbestimmter Schwellwert ist, insbesondere, falls D>0.

In anderen Worten wird gemäß der vorangegangen ausgeführten bevorzugten Ausführungsform(en) die Differenz der Grauwerthistogramme zweier Pixelbilder bzw. Screenshots gebildet, wobei, wenn mindestens eine Komponente bzw. einer Mindestzahl von Komponenten des resultierenden Vektors bzw. die Differenzvariable D ungleich 0 ist, Unterschiede zwischen den beiden Bildern vorliegen. Hierbei werden zwei Pixelbilder bzw. Screenshots bzw. Bilder generiert, deren Pixel in den Berechnungsprozeß einfließen, wobei beide Pixelbilder dieselbe Breite M und dieselbe Höhe N aufweisen müssen. Sollte dies nicht der Fall sein, werden sie vorzugsweise automatisch zurecht geschnitten bzw. reduziert, d.h. ihre Pixel auf M x N Pixel reduziert.

Die Differenzvariable D kann auch als L2-Distanz bezeichnet werden.

Vorzugsweise umfaßt das Verfahren den initialen Schritt bzw. die initialen Schritte:

- Erzeugen eines ersten und eines zweiten Pixelbildes jeweils der Größe M*N Pixel

- Auswählen eines rechteckigen Auswahlbereichs der Größe M/2*N/2 Pixel eines ersten Pixelbildes, wobei ein geometrischer Mittelpunkt des Auswahlbereichs mit einem geometrischen Mittelpunkt des ersten Pixelbildes identisch ist;

- Auswählen eines rechteckigen Auswahlbereichs der Größe M/2*N/2 Pixel eines zweiten Pixelbildes, wobei ein geometrischer Mittelpunkt des Auswahlbereichs mit einem geometrischen Mittelpunkt des zweiten Pixelbildes identisch ist;

- Berechnen einer Farbe eines jeden Pixels des Auswahlbereichs des ersten Pixelbildes;

- Berechnen einer Farbe eines jeden Pixels des Auswahlbereichs des zweiten Pixelbildes;

- Berechnen eines initialen Korrelationskoeffizienten anhand der Farben aller Pixel des Auswahlbereichs des ersten Pixelbildes und anhand der Farben aller Pixel des Auswahlbereichs des zweiten Pixelbildes, wobei dem Auswahlbereich eine Verschieberichtung mit einer Kennzahl 0 zugeordnet ist;
die wiederholt durchgeführten Schritte:

- Auswählen eines weiteren rechteckigen Auswahlbereichs der Größe M/2*N/2 Pixel des zweiten Pixelbildes, wobei der geometrische Mittelpunkt des weiteren rechteckigen Auswahlbereichs des zweiten Pixelbildes gegenüber dem geometrischen Mittelpunkt des zweiten Pixelbildes entlang einer vorbestimmten Verschieberichtung verschoben ist und der Verschieberichtung eine Kennzahl zugeordnet ist;

- Berechnen einer Farbe eines jeden Pixels des weiteren Auswahlbereichs des zweiten Pixelbildes;

- Berechnen eines weiteren Korrelationskoeffizienten anhand der Farben aller Pixel des Auswahlbereichs des ersten Pixelbildes und anhand der Farben aller Pixel des weiteren Auswahlbereichs des zweiten Pixelbildes,

wobei für bei jedem wiederholt durchgeführten Schritt die Position des geometrischen Mittelpunktes des weiteren rechteckigen Auswahlbereichs des zweiten Pixelbildes von den jeweiligen Positionen des geometrischen Mittelpunktes der vorangegangenen Auswahlbereiche des zweiten Pixelbildes verschieden ist,
und den abschließenden Schritt:

- Ausgeben der Kennzahl der Verschieberichtung des weiteren Auswahlbereichs mit dem größten Korrelationskoeffizienten aus der Menge des initialen Korrelationskoeffizienten und aller weiteren Korrelationskoeffizienten.

Der Korrelationskoeffizient kann hierbei ein herkömmlicher Korrelationskoeffizient sein, wie sie in der Statistik bekannt sind.

In anderen Worten werden zwei Pixelbilder, d.h. vorzugsweise von unterschiedlichen Browsern erzeugte Screenshots verglichen, wobei insbesondere untersucht wird, ob die von den unterschiedlichen Browsern erzeugten Screenshots gegeneinander in eine bestimmte Richtung "verschoben" oder skaliert sind. Dies kann anhand des sogenannten "Versetzungsvektors " bzw. "Displacementvektors" durchgeführt werden, wobei der Displacementvektor als Zahl zwischen 1 und 8 angibt, wie die vermutete Richtung der Verschiebung ist, z.B. bedeutet die Zahl (im Uhrzeigersinn angegeben) 1: nach oben 2: nach oben rechts, 3: nach rechts, ..., 8: nach links oben.

Der Wert des Displacementvektors, d.h. eine Zahl zwischen 1 und 8, kann als Kennzahl ausgegeben werden.

In anderen Worten werden zwei Pixelbilder generiert, wobei jedes Pixelbild eine Größe M x N Pixel aufweist. Anschließend kann ein imaginäres bzw. virtuelles Fenster definiert werden, welches die Höhe N/2 und die Breite M/2 (in Pixel) aufweist. Dieses Fenster wird mittig auf den ersten Screenshot plaziert. Ebenso wird ein entsprechendes Fenster mittig auf dem zweiten Screenshot plaziert. Anders ausgedrückt kann ein zentraler bzw. intermediärer Bereich des ersten Screenshots ausgewählt werden, wobei dieser Bereich bevorzugt rechteckig ist und eine Höhe N/2 und eine Breite M/2 Pixel aufweist. Der Mittelpunkt des ausgewählten Bereichs bzw. des imaginären Fensters entspricht bevorzugt im wesentlichen dem Mittelpunkt des Screenshots, wobei Mittelpunkt synonym mit geometrischer Mitte verwendet werden kann.

Weiter wird die Farbe eines Pixels als eine Zahl interpretiert, die eine bestimmte Farbe eindeutig identifiziert und bevorzugt aus den R-, G-, B-Werten gewonnen wird. Hierzu kann ein spezifischer Algorithmus verwendet werden. Anschließend wird über alle Pixel in dem imaginären Fenster, d.h. über alle Pixel in dem Auswahlbereich, iteriert und es wird der Korrelationskoeffizient zwischen den Farben im ersten und zweiten Screenshot ermittelt, d.h. es wird der Korrelationskoeffizient bezogen auf die Farben der Pixel des imaginären Fensters des ersten Screenshots und bezogen auf die Farben der entsprechenden Pixel, d.h. an der entsprechenden Position angeordneten Pixel des imaginären Fensters des zweiten Screenshots, ermittelt. Das Ergebnis kann zwischengespeichert werden. Anschließend wird das imaginäre Fenster in dem zweiten Screenshot in alle acht möglichen Richtungen verschoben, d.h. nach oben, oben rechts, rechts, ..., links, links oben, wobei der Mittelpunkt des Fensters jeweils entlang einer oder beider Achsen, d.h. im wesentlichen parallel zu den Kanten des Pixelbildes, um M/4 und/oder N/4 Pixel verschoben wird. Hierbei kann die Verschiebung entlang jeder der Achsen in positiver oder negativer Richtung sein. Für jede Richtung wird der Korrelationskoeffizient ermittelt.

In anderen Worten kann bei einer herkömmlichen Betrachtung des Pixelbildes als Koordinatenursprung beispielsweise die linke untere Ecke (aus der Sicht des Betrachters) des Pixelbildes gewählt werden. Ausgehend von diesem Koordinatenursprung wird der Mittelpunkt des virtuellen Pixelbildes ausgewählt, wobei dieser die Koordinaten (M/2, N/2) aufweist. Die erste Koordinate, d.h. die x-Koordinate, bestimmt in diesem Beispiel allen Pixeln, welche M/2 Pixel rechts (aus der Sicht eines Betrachters) von dem Koordinatenursprung liegen. Die zweite Koordinate, d.h. die y-Koordinate, bestimmt alle Pixel, welche N/2 Pixel oberhalb (aus der Sicht eines Betrachters) des Koordinatenursprungs sind. Ausgehend von dem Mittelpunkt des Pixelbildes kann der Mittelpunkt des Auswahlbereichs verschoben werden, wobei die Verschieberichtung eine Richtung im wesentlichen parallel zu einer Diagonale des Pixelbildes sein kann (d.h. nach rechts oben, nach links unten, nach rechts unten oder nach links oben) oder parallel zu einer der Kanten des Bildes, d.h. parallel zu einer der Achsen des Koordinatensystems (d.h. nach oben, nach unten, nach rechts oder nach links)

Das Koordinatensystem ist folglich ein kartesisches Koordinatensystem, bei dem der Koordinatenursprung vorzugsweise eine Ecke des Pixelbildes ist, insbesondere die linke untere Ecke (aus der Sicht eines Betrachters) des Pixelbildes. Die Achsen des Koordinatensystems fallen mit den Kanten des Pixelbildes zusammen, welche sich in der linken unteren Ecke treffen.

Aus allen berechneten bzw. bestimmten Korrelationskoeffizienten wird der größte Korrelationskoeffizient bestimmt, und der Wert des Displacementvektors für die entsprechende Richtung ausgegeben. In anderen Worten wird als Kennzahl beispielsweise 0 ausgegeben, falls das ursprünglich mittig angeordnete imaginäre Fenster des ersten und zweiten Screenshots den größten Korrelationskoeffizienten aufweisen. Als Kennzahl wird beispielsweise 1 ausgegeben, falls das mittig angeordnete imaginäre Fenster des ersten Screenshots und das um N/4 Pixel nach oben (und weder nach rechts noch nach links) verschobene imaginäre Fenster des zweiten Screenshots den größten Korrelationskoeffizienten aufweisen. Als Kennzahl wird beispielsweise 3 ausgegeben, falls das imaginäre Fenster des ersten Screenshots und das um M/4 Pixel nach rechts (und weder nach oben noch nach unten) verschobene imaginäre Fenster des zweiten Screenshots des größten Korrelationskoeffizienten aufweist.

Weiterhin vorzugsweise wird eine Ecke des M*N Pixel großen zweiten Pixelbildes als Koordinatenursprung ausgewählt und ausgehend von der ausgewählten Ecke des zweiten Pixelbildes ist die Kante der Länge M Pixel des zweiten Pixelbildes eine erste Achse eines Koordinatensystems und, ausgehend von der ausgewählten Ecke des zweiten Pixelbildes ist die weitere Kante der Länge N Pixel des zweiten Pixelbildes eine zweite Achse des Koordinatensystems ist, wobei der geometrische Mittelpunkt M/2 Pixel entlang der ersten Achse entfernt vom Koordinatenursprung ist und N/2 Pixel entlang der zweiten Achse entfernt vom Koordinatenursprung ist und

die Verschieberichtung eine von acht Richtungen sein kann, wobei der geometrische Mittelpunkt des weiteren Auswahlbereichs ausgehend vom geometrischen Mittelpunkt des Pixelbildes um

- 0 Pixel entlang der Richtung der ersten Achse und N/4 Pixel entlang der Richtung der zweiten Achse verschoben wird und dieser Richtung die Kennzahl 1 zugeordnet ist;

- M/4 Pixel entlang der Richtung der ersten Achse und N/4 Pixel entlang der - Richtung der zweiten Achse verschoben wird und dieser Richtung die Kennzahl 2 zugeordnet ist;

- M/4 Pixel entlang der Richtung der ersten Achse und 0 Pixel entlang der Richtung der zweiten Achse verschoben wird und dieser Richtung die Kennzahl 3 zugeordnet ist;

- M/4 Pixel entlang der Richtung der ersten Achse und N/4 Pixel entgegen der Richtung der zweiten Achse verschoben wird und dieser Richtung die Kennzahl 4 zugeordnet ist;

- 0 Pixel entlang der Richtung der ersten Achse und N/4 Pixel entgegen der Richtung der zweiten Achse verschoben wird und dieser Richtung die Kennzahl 5 zugeordnet ist;

- M/4 Pixel entgegen der Richtung der ersten Achse und N/4 Pixel entgegen der Richtung der zweiten Achse verschoben wird und dieser Richtung die Kennzahl 6 zugeordnet ist;

- M/4 Pixel entgegen der Richtung der ersten Achse und 0 Pixel entlang der Richtung der zweiten Achse verschoben wird und dieser Richtung die Kennzahl 7 zugeordnet ist;

- M/4 Pixel entgegen der Richtung der ersten Achse und N/4 Pixel entlang der Richtung der zweiten Achse verschoben wird und dieser Richtung die Kennzahl 8 zugeordnet ist;

Obige Ausführungen, insbesondere zur Wahl des Koordinatensystems eines Pixelbildes sowie zur Definition der Verschieberichtung, usw. gelten sinngemäß für die Wahl bzw. Position eines Koordinatensystems des jeweiligen Pixelbildes sowie die Wahl und Position der Auswahlbereiche sowie der Verschiebung zumindest eines der Auswahlbereiche.

Weiterhin vorzugsweise wird jedes Pixelbild durch die Darstellungsvorrichtung und/oder die Auswertungsvorrichtung gemäß einer vorbestimmten Farbe eingefärbt, wobei die vorbestimmte Farbe für alle Pixelbilder verschieden ist und wird zum automatischen Ermitteln und/oder Darstellen des Unterschieds der Pixelbilder der zumindest einen web-basierten Benutzeroberfläche von der Auswertungsvorrichtung ein Ausgabepixelbild ausgegeben, welches durch Anwenden einer vorgegebenen Operation, insbesondere pixelweiser Differenz auf die einzelnen Pixelbilder erzeugt wird.

In anderen Worten kann beispielsweise jedes Pixelbild in Fehlfarben dargestellt werden, wobei beispielsweise ein Pixelbild grün eingefärbt sein kann, ein Pixelbild rot eingefärbt sein kann, ein Pixelbild blau eingefärbt sein kann, usw.. Werden die Pixelbilder überlagert, wobei beispielsweise ein oder mehrere der Pixelbilder zumindest teilweise transparent dargestellt werden können, sind für den Web-Designer vorteilhafterweise Darstellungsunterschiede visuell in einfacher Weise zu identifizieren. Vorteilhafterweise gestattet somit die Überlagerung von Screenshots gemäß einer bevorzugten Ausführungsform der Erfindung Web-Designern, die Darstellungsunterschiede schnell zu erfassen, die sie interessieren.

Um die Differenz zweier oder mehrerer Bilder zu generieren, können unterschiedliche Operatoren benutzt werden. Unter der Annahme daß zumindest zwei Bilder gleich hoch und breit sind, wird im Prinzip über die gesamten Pixel des ersten Bildes iteriert und die Farbwerte eines Pixels des ersten Bildes werden anhand eines vordefinierten Operators mit dem entsprechenden Pixel des zweiten Bildes verrechnet, wobei dies für alle Pixel der beiden Bilder durchgeführt wird. Das Ergebnis ist ein neues Bild, welches dargestellt wird.

Besonders bevorzugt wird zum automatischen Ermitteln und/oder Darstellen des Unterschieds der N Pixelbilder der zumindest einen web-basierten Benutzeroberfläche von der Auswertungsvorrichtung ein Ausgabepixelbild ausgegeben,

wobei das Ausgabepixelbild aus N einzelnen Pixelbildern derart erzeugt wird, daß für jedes Pixelbild jeweils der Farbwert eines jeden Pixels dieses Pixelbildes gemäß einer vorbestimmten Farbwertänderungsfunktion verändert wird, wobei die Farbwertänderungsfunktion für alle Pixelbilder verschieden ist und

wobei gemäß ihrer Position entsprechende Pixel der Pixelbilder anhand einer vorgegeben Operation, insbesondere pixelweiser Differenz, als das entsprechende Pixel des Ausgabepixelbildes miteinander verrechnet werden.

Weiterhin vorzugsweise umfaßt die Operation eine Vektordifferenz, XOR der R-, G-, B-Werte, eine Mittelwertbildung usw..

Vorteilhafterweise ist es somit nicht notwendig, daß ein Benutzer, beispielsweise ein Web-Designer, mehrere Betriebssysteme, Browser-Typen, Browser-Versionen, mit unterschiedlichen Bildschirmauflösungen installiert, um die jeweiligen Screenshots zu erhalten.

Weiterhin vorteilhafterweise können in den Screenshots viele Details, z.B. Text, Bilder, Tabellen, usw., einer Web-Seite enthalten sein, wobei durch eine simple Differenz zweier Screenshots und/oder einer Überlagerung mit zumindest teilweiser Transparenz die Unterschiede zwischen den beiden Screenshots unter Umständen kaum sichtbar wären. Gemäß einer bevorzugten Ausführungsform der Erfindung wurde erkannt, daß durch Einfärben der einzelnen Screenshots, ähnlich einer Falschfarbendarstellung, vor der Differenzbildung Unterschiede nach der Differenzbildung besser darstellbar sind und von dem Benutzer bzw. Betrachter besser als herkömmlich erkannt werden können.

Beispielsweise erfolgt die Einfärbung über eine Look-up-Tabelle, die für einen bestimmten Farbwert einen zugehörigen Farbwert für das eingefärbte Bild enthält. Die Farbwerte der Look-up-Tabelle können auch durch vordefinierte Funktionen erzeugt werden, die z.B. den R-, G-, B-Farbraum so abbilden, daß die Farben des eingefärbten Bildes bläulich, rötlich, grünlich, gelblich usw. erscheinen. Des weiteren kann eine Legende in das Ergebnisbild eingefügt werden, welche die Darstellung durch einen bestimmten Browser identifiziert, z.B. durch Assoziierung der Falschfarbe mit dem jeweiligen Browser.

In anderen Worten kann die Farbwertänderungsfunktion sowohl eine Verknüpfung zu einer Look-up-Tabelle aufweisen und/oder eine direkte Operation auf eine oder mehrere Farbwerte eines Pixels umfassen, wobei dies für alle Pixel gilt.

Zum Überlagern der Screenshots kann beispielsweise ein Screenshot nicht transparent sein und ein zweiter Screenshot eine von 0 verschiedene Transparenz aufweisen, wobei beispielsweise 2, 3, 4, 5, usw., Pixelbilder überlagert werden können, welche insbesondere jeweils unterschiedlich eingefärbt sind und die Pixelbilder zumindest teilweise transparent hintereinander dargestellt können.

Weiterhin vorzugsweise wird beim Übermitteln der Adresse der zumindest einen web-basierten Benutzeroberfläche und/oder beim Übermitteln des Quellcodes der zumindest einen web-basierten Benutzeroberfläche an die Auswertungsvorrichtung zumindest ein Betriebssystem und/oder zumindest ein Web-Browser spezifiziert bzw. angegeben, für welches, bzw. welchen die Pixelbilder der zumindest eine web-basierten Benutzeroberfläche erzeugt wird bzw. werden.

In anderen Worten kann die web-basierte Benutzeroberfläche von der Auswertungsvorrichtung an eine Darstellungsvorrichtung übergeben werden, auf welcher ein bestimmtes Betriebssystem ausgeführt wird. Auf diese Darstellungsvorrichtung, beispielsweise einen herkömmlichen Computer, können 1, 2, 3, usw. Web-Browser installiert sein, wobei eine Teilmenge oder alle dieser Web-Browser jeweils zum Anfertigen eines Screenshots herangezogen werden.

Beispielsweise können auch verschiedene Betriebssysteme, wie z.B. Linux, Windows, MacOS, usw. bestimmt werden.

Bevorzugt wird die Adresse der zumindest einen web-basierten Benutzeroberfläche und/oder der Quellcode mitsamt der zugehörigen graphischen Elemente der zumindest einen web-basierten Benutzeroberfläche an die jeweilige Darstellungsvorrichtung übermittelt, die das entsprechende Betriebssystem und/oder den entsprechenden Web-Browser aufweist.

Wird beispielsweise spezifiziert, daß ein Screenshot unter dem Betriebssystem Windows, bei Darstellung durch den Web-Browser "Internet-Explorer" dargestellt werden soll und ein weiterer Screenshot unter dem Betriebssystem "Linux" bei Darstellung durch den Web-Browser "Opera" generiert werden soll, wird die Adresse bzw. der Quellcode insbesondere mitsamt der zugehörigen graphischen Elemente der web-basierten Benutzeroberfläche an entsprechende Darstellungsvorrichtungen, d.h. entsprechende Computer bzw. Clients bzw. Server, usw. übergeben.

Der Begriff "aufweisen" wird hierbei insbesondere gleichbedeutend mit "installiert" verwendet. In anderen Worten läuft ein Betriebssystem auf der Darstellungsvorrichtung, welches das Betriebssystem umfaßt.

Weiterhin vorzugsweise werden beim Übermitteln der Adresse der zumindest einen web-basierten Benutzeroberfläche und/oder beim Übermitteln des Quellcodes mitsamt der zugehörigen graphischen Elemente der zumindest einen web-basierten Benutzeroberfläche an die Auswertungsvorrichtung, Auflösungen angegeben, welche die Pixelbilder der zumindest einen web-basierten Benutzeroberfläche erzeugt werden sollen, wobei die Auflösungen an die jeweilige(n) Darstellungsvorrichtung(en) übermittelt werden.

Auflösungen können insbesondere in Anzahl der Pixel pro Bild angegeben werden, wobei beispielsweise als Auflösung die Anzahl der M*N Pixel des Bildes angegeben wird. Dies kann beispielsweise eine Auflösung von 1240 x 1024 Pixel, 640 x 480Pixel, usw. sein. Insbesondere können die Auflösungen gleich oder verschieden sein.

Datenverarbeitungseinrichtung gemäß eines Aspekts der Erfindung

Ein weiterer Aspekt der vorliegenden Erfindung betrifft eine Datenverarbeitungseinrichtung, insbesondere ein Computersystem, zum Analysieren und/oder Testen zumindest einer web-basierten Benutzeroberfläche mit:

- einer Eingabeeinrichtung welche zum Eingeben und Übermitteln einer Adresse zumindest einer web-basierten Benutzeroberfläche und/oder des Quellcodes mitsamt der zugehörigen graphischen Elemente zumindest einer web-basierten Benutzeroberfläche an eine Auswertungsvorrichtung ausgelegt ist;

- einer Auswertungsvorrichtung, welche zum Übermitteln der Adresse der zumindest einen web-basierten Benutzeroberfläche und/oder des Quellcodes mitsamt der zugehörigen graphischen Elemente der zumindest einen web-basierten Benutzeroberfläche an zumindest zwei unterschiedlich konfigurierten Darstellungsvorrichtungen ausgelegt ist;

- zumindest zwei unterschiedlich konfigurierte Darstellungsvorrichtungen, welche jeweils zum Generieren zumindest eines Pixelbildes der web-basierten Benutzeroberfläche ausgelegt sind und welche zum übermitteln eines jeden Pixelbildes an die Auswertungsvorrichtung ausgelegt sind, wobei

- die Auswertungsvorrichtung ferner zum automatischen Ermitteln und/oder Darstellen zumindest eines Unterschieds zwischen den Pixelbildern der zumindest einen web-basierten Benutzeroberfläche ausgelegt ist.

Die Auswertungsvorrichtung ist ausgelegt, zum Ermitteln des Unterschieds der Pixelbilder für jedes Pixelbild zumindest eine Kennzahl) zu ermitteln und die zumindest eine Kennzahl eines jeden Pixelbildes mit der zumindest einen Kennzahl der weiteren Pixelbilder zu vergleichen.

Bevorzugte Ausführungsformen der Datenverarbeitungseinrichtung Vorzugsweise

- sind die jeweiligen Darstellungsvorrichtungen ausgelegt, ein jedes Pixelbild als Graustufenbild mit M*N Pixeln zu erzeugen, wobei für jeden Pixel der Wert der Graustufe zwischen 0 und 255 beträgt und/oder; ist die Auswertungsvorrichtung ausgelegt, aus jedem Pixelbild ein Graustufenbild mit M*N Pixeln zu erzeugen, wobei für jeden Pixel der Wert der Graustufe zwischen 0 und 255 beträgt und/oder;

- sind die jeweiligen Darstellungsvorrichtungen ausgelegt, und/oder ist die Auswertungsvorrichtung ausgelegt, ein Grauwerthistogramm H = ($x_0$, $x_1$, ..., ..., $x_{255}$) für jedes Pixelbild zu erzeugen, wobei der Wert eines jeden Eintrags $x_i$ des Grauwerthistogramms angibt, wie viele Pixel mit dem Grauwert i in jeweiligen Pixelbild vorhanden sind;

- sind die jeweiligen Darstellungsvorrichtungen ausgelegt und/oder ist die Auswertungsvorrichtung ausgelegt, ein relatives Grauwerthistogramm h = ($y_0$, $y_1$, ..., $Y_{255}$) = H / (M*N) für jedes Pixelbild zu berechnen 255

- ist die Auswertungsvorrichtung ausgelegt, eine Entropie $E = -\sum_{i=0}^{255} y_i * \log_2 y_i$ für jedes Pixelbild zu berechnen und

- ist die Auswertungsvorrichtung ausgelegt, zumindest eine Ausgabevariable in Abhängigkeit der Entropie eines jeden Pixelbildes auszugeben.

Bevorzugt

- sind die jeweiligen Darstellungsvorrichtungen ausgelegt, ein jedes Pixelbild mit M*N Pixeln zu erzeugen, wobei für jeden Pixel der Farbwert einer jeden der Farben Rot, Grün und Blau zwischen 0 und 255 beträgt;

- sind die jeweiligen Darstellungsvorrichtungen ausgelegt und/oder ist die Auswertungsvorrichtung ausgelegt, zumindest ein Farbwerthistogramm $H_j$ = ($x_{j0}$, $x_{j1}$, ..., $x_{j255}$) für zumindest eine Farbe der Farben Rot, Grün und Blau für jedes Pixelbild zu erzeugen, wobei der Wert eines jeden Eintrags $x_{ji}$ des Farbwerthistogramms j angibt, wie viele Pixel mit dem Farbwert i der entsprechenden Farbe in dem jeweiligen Pixelbild vorhanden sind;

- sind die jeweiligen Darstellungsvorrichtungen ausgelegt und/oder ist die Auswertungsvorrichtung ausgelegt, ein relatives Farbwerthistogramm $h_j = (y_{j0}, y_{j1}, ..., y_{j255}) = H_j / (M*N)$ für jedes Pixelbild zu berechnen;

- ist die Auswertungsvorrichtung ausgelegt, eine Entropie zumindest einer Farbe 255 $E = -\sum_{i=0}^{255} y_{ji} * \log_2 y_{ji}$ für jedes Pixelbild zu berechnen

- ist die Auswertungsvorrichtung ausgelegt, zumindest eine Ausgabevariable in Abhängigkeit zumindest der Entropie eines jeden Pixelbildes einer Farbe auszugeben.

Vorzugsweise ist die Datenverarbeitungseinrichtung ausgelegt, die Ausgabevariable in Abhängigkeit zumindest der Entropie eines jeden Pixelbildes für zwei oder drei der Farben Rot, Grün und Blau auszugeben.

Weiterhin vorzugsweise ist die Auswertungsvorrichtung ausgelegt, die Ausgabevariable derart zu bestimmen, daß die Ausgabevariable die Entropie eines jeden Pixelbildes für ein Graustufenbild und/oder für zumindest eine Farbe umfaßt.

Bevorzugt ist die Auswertungsvorrichtung ausgelegt, die Ausgabevariable derart zu bestimmen, daß die Ausgabevariable anhand der Entropie E eines jeden Pixelbildes erstellt wird.

Gemäß einer bevorzugten Ausführungsform der Datenverarbeitungseinrichtung

- sind zwei Darstellungsvorrichtungen ausgelegt, jeweils ein Pixelbild als Graustufenbild mit M*N Pixeln zu erzeugen, wobei für jedes Pixelbild für jeden Pixel der Wert der Graustufe zwischen 0 und 255 beträgt;

- ist die erste der zwei Darstellungsvorrichtungen ausgelegt, ein erstes Grauwerthistogramm $H = (x_0, x_1, ..., x_{255})$ für das erste Pixelbild zu erzeugen, wobei der Wert eines jeden Eintrags $x_i$ des ersten Grauwerthistogramms H angibt, wie viele Pixel mit dem Grauwert i in dem ersten Pixelbild vorhanden sind;

- ist die zweite der zwei Darstellungsvorrichtungen ausgelegt, ein zweites Grauwerthistogramm $H' = (x'_0, x'_1, ..., x'_{255})$ für das zweite Pixelbild zu erzeugen, wobei der Wert eines jeden Eintrags $x'_i$ des zweiten Grauwerthistogramms H' angibt, wie viele Pixel mit dem Grauwert i in dem zweiten Pixelbild vorhanden sind und/oder

- ist die Auswertungsvorrichtung ausgelegt, ein erstes Grauwerthistogramm $H = (x_0, x_1, ..., x_{255})$ für das erste Pixelbild zu erzeugen, wobei der Wert eines jeden Eintrags $x_i$ des ersten Grauwerthistogramms H angibt, wie viele Pixel mit dem Grauwert i in dem ersten Pixelbild vorhanden sind und ein zweites Grauwerthistogramm $H' = (x'_0, x'_1, ..., x'_{255})$ für das zweite Pixelbild zu erzeugen, wobei der Wert eines jeden Eintrags $x'_i$ des zweiten Grauwerthistogramms H' angibt, wie viele Pixel mit dem Grauwert i in dem zweiten Pixelbild vorhanden. sind,

- ist die Auswertungsvorrichtung ausgelegt, eine Differenzvariable D zu berechnen, wobei gilt:

$$D = |H - H'| = \sum_{i=0}^{255} |H[i] - H'[i]| ;$$

und

- ist die Auswertungsvorrichtung ausgelegt, einen Unterschied zu kennzeichnen, falls D größer als ein vorbestimmter Schwellwert ist, insbesondere, falls D>0.

Gemäß einer weiteren bevorzugten Ausführungsform der Datenverarbeitungseinrichtung

- sind zwei Darstellungsvorrichtungen ausgelegt, jeweils ein Pixelbild als Graustufenbild mit M*N Pixeln zu erzeugen, wobei für jedes Pixelbild für jeden Pixel der Wert der Graustufe zwischen 0 und 255 beträgt;

- ist die erste der zwei Darstellungsvorrichtungen ausgelegt, ein erstes Grauwerthistogramm $H = (x_0, x_1, ..., x_{255})$ für das erste Pixelbild zu erzeugen, wobei der Wert eines jeden Eintrags $x'_1$, des ersten Grauwerthistogramms $H$ angibt, wie viele Pixel mit dem Grauwert i in dem ersten Pixelbild vorhanden sind;

- ist die zweite der zwei Darstellungsvorrichtungen ausgelegt, ein zweites Grauwerthistogramm $H' = (x'_0, x'_1, ..., x'_{255})$ für das zweite Pixelbild zu erzeugen, wobei der Wert eines jeden Eintrags $x'_i$ des zweiten Grauwerthistogramms $H'$ angibt, wie viele Pixel mit dem Grauwert i in dem zweiten Pixelbild vorhanden sind und/oder

- ist die Auswertungsvorrichtung ausgelegt, ein erstes Grauwerthistogramm $H = (x_0, x_1, ..., x_{255})$ für das erste Pixelbild zu erzeugen, wobei der Wert eines jeden Eintrags $x_i$ des ersten Grauwerthistogramms $H$ angibt, wie viele Pixel mit dem Grauwert i in dem ersten Pixelbild vorhanden sind und ein zweites Grauwerthistogramm $H' = (x'_0, x'_1, ..., x'_{255})$ für das zweite Pixelbild zu erzeugen, wobei der Wert eines jeden Eintrags $x'_i$ des zweiten Grauwerthistogramms $H'$ angibt, wie viele Pixel mit dem Grauwert i in dem zweiten Pixelbild vorhanden sind,

- ist die Auswertungsvorrichtung ausgelegt, eine Differenzvariable D zu berechnen, wobei gilt:

$$D = |H - H'| = \sum_{i=0}^{255} \left( |H[i] - H'[i]| \right)^2 ;$$

und

- ist die Auswertungsvorrichtung ausgelegt, einen Unterschied zu kennzeichnen, falls D größer als ein vorbestimmter Schwellwert ist, insbesondere, falls D>0.

Gemäß einer besonders bevorzugten Ausführungsform der Datenverarbeitungseinrichtung sind die Darstellungsvorrichtungen jeweils ausgelegt, ein erstes und ein zweites Pixelbild jeweils der Größe M*N Pixel zu erzeugen, wobei die Auswertungsvorrichtung ausgelegt ist, in einem initialen Schritt

- einen rechteckigen Auswahlbereich der Größe M/2*N/2 Pixel des ersten Pixelbildes auszuwählen, wobei ein geometrischer Mittelpunkt des Auswahlbereichs mit einem geometrischen Mittelpunkt des ersten Pixelbildes identisch ist;

- einen rechteckigen Auswahlbereich der Größe M/2*N/2 Pixel eines zweiten Pixelbildes auszuwählen, wobei ein geometrischer Mittelpunkt des Auswahlbereichs mit einem geometrischen Mittelpunkt des zweiten Pixelbildes identisch ist;

- eine Farbe eines jeden Pixels des Auswahlbereichs des ersten Pixelbildes zu berechnen;

- eine Farbe eines jeden Pixels des Auswahlbereichs des zweiten Pixelbildes zu berechnen;

- einen initialen Korrelationskoeffizienten anhand der Farben aller Pixel des Auswahlbereichs des ersten Pixelbildes und anhand der Farben aller Pixel des Auswahlbereichs des zweiten Pixelbildes zu berechnen und dem Auswahlbereich eine Verschieberichtung mit einer Kennzahl 0 zuzuordnen;

die Auswertungsvorrichtung ausgelegt ist, in den wiederholt durchgeführten Schritten:

- einen weiteren rechteckigen Auswahlbereichs der Größe M/2*N/2 Pixel des - zweiten Pixelbildes auszuwählen, wobei der geometrische Mittelpunkt des weiteren rechteckigen Auswahlbereichs des zweiten Pixelbildes gegenüber dem geometrischen Mittelpunkt des zweiten Pixelbildes entlang einer vorbestimmten Verschieberichtung verschoben ist und der Verschieberichtung mit eine Kennzahl zugeordnet ist;

- eine Farbe eines jeden Pixels des weiteren Auswahlbereichs des zweiten Pixelbildes zu berechnen;

- einen weiteren Korrelationskoeffizienten anhand der Farben aller Pixel des Auswahlbereichs des ersten Pixelbildes und anhand der Farben aller Pixel des weiteren Auswahlbereichs des zweiten Pixelbildes zu berechnen,

wobei bei jedem wiederholt durchgeführten Schritt die Position des geometrischen Mittelpunktes des weiteren rechteckigen Auswahlbereichs des zweiten Pixelbildes von den jeweiligen Positionen des geometrischen Mittelpunktes der vorangegangenen Auswahlbereiche des zweiten Pixelbildes verschieden ist und wobei

die Auswertungsvorrichtung ausgelegt ist, in einem abschließenden Schritt: die Kennzahl der Verschieberichtung des weiteren Auswahlbereichs mit dem größten Korrelationskoeffizienten aus der Menge des initialen Korrelationskoeffizienten und aller weiteren Korrelationskoeffizienten auszugeben.

Besonders bevorzugt ist die Auswertungsvorrichtung ausgelegt,

eine Ecke des M*N Pixel großen zweiten Pixelbildes als Koordinatenursprung auszuwählen und ausgehend von der ausgewählten Ecke des zweiten Pixelbildes die Kante der Länge M Pixel des zweiten Pixelbildes als eine erste Achse eines Koordinatensystems zu bestimmen und, ausgehend von der ausgewählten Ecke des zweiten Pixelbildes, die weitere Kante der Länge N Pixel des zweiten Pixelbildes als eine zweite Achse des Koordinatensystems zu bestimmen, den geometrischen Mittelpunkt M/2 Pixel entlang der ersten Achse entfernt vom Koordinatenursprung und N/2 Pixel entlang der zweiten Achse entfernt vom Koordinatenursprung zu bestimmen und

die Verschieberichtung als eine von acht Richtungen zu bestimmen, wobei der geometrische Mittelpunkt des weiteren Auswahlbereichs ausgehend vom geometrischen Mittelpunkt des Pixelbildes um

- 0 Pixel entlang der Richtung der ersten Achse und N/4 Pixel entlang der Richtung der zweiten Achse verschoben ist und dieser Richtung die Kennzahl 1 zugeordnet ist;

- M/4 Pixel entlang der Richtung der ersten Achse und N/4 Pixel entlang der Richtung der zweiten Achse verschoben ist und dieser Richtung die Kennzahl 2 zugeordnet ist;

- M/4 Pixel entlang der Richtung der ersten Achse und 0 Pixel entlang der Richtung der zweiten Achse verschoben ist und dieser Richtung die Kennzahl 3 zugeordnet ist;

- M/4 Pixel entlang der Richtung der ersten Achse und N/4 Pixel entgegen der Richtung der zweiten Achse verschoben ist und dieser Richtung die Kennzahl 4 zugeordnet ist;

- 0 Pixel entlang der Richtung der ersten Achse und N/4 Pixel entgegen der Richtung der zweiten Achse verschoben ist und dieser Richtung die Kennzahl 5 zugeordnet ist;

- M/4 Pixel entgegen der Richtung der ersten Achse und N/4 Pixel entgegen der Richtung der zweiten Achse verschoben ist und dieser Richtung die Kennzahl 6 zugeordnet ist;

- M/4 Pixel entgegen der Richtung der ersten Achse und 0 Pixel entlang der Richtung der zweiten Achse verschoben ist und dieser Richtung die Kennzahl 7 zugeordnet ist;

- M/4 Pixel entgegen der Richtung der ersten Achse und N/4 Pixel entlang der Richtung der zweiten Achse verschoben ist und dieser Richtung die Kennzahl 8 zugeordnet ist;

Vorzugsweise ist jede Darstellungsvorrichtung und/oder die Auswertungsvorrichtung ausgebildet, jedes Pixelbild gemäß einer vorbestimmten Farbe einzufärben, wobei die vorbestimmte Farbe für alle Pixelbilder verschieden sein kann bzw. ist und

die Auswertungsvorrichtung ausgebildet ist, zum automatischen Ermitteln und/oder Darstellen des Unterschieds der Pixelbilder der zumindest einen web-basierten Benutzeroberfläche ein Ausgabepixelbild auszugeben, welches durch anwenden einer vorgegeben Operation, insbesondere pixelweiser Differenz, auf die einzelnen Pixelbilder erzeugt wird.

Besonders bevorzugt ist die Auswertungsvorrichtung ausgebildet,

zum automatischen Ermitteln und/oder Darstellen des Unterschieds der N Pixelbilder der zumindest einen web-basierten Benutzeroberfläche ein Ausgabepixelbild auszugeben,

wobei die Auswertungsvorrichtung ausgebildet ist, das Ausgabepixelbild aus N einzelnen Pixelbildern derart erzeugen, daß für jedes Pixelbild jeweils der Farbwert eines jeden Pixels dieses Pixelbildes gemäß einer vorbestimmten Farbwertänderungsfunktion verändert wird, wobei die Farbwertänderungsfunktion für alle Pixelbilder verschieden ist und

wobei die Auswertungsvorrichtung ausgebildet ist, gemäß ihrer Position entsprechende Pixel der Pixelbilder anhand einer vorgegeben Operation, insbesondere pixelweiser Differenz, als das entsprechende Pixel des Ausgabepixelbildes miteinander zu verrechnen.

Vorzugsweise umfaßt die Operation Vektordifferenz und/oder XOR der R-, G-, B-Werte und/oder Mittelwertbildung, usw.

Vorzugsweise ist die Eingabeeinrichtung ausgelegt, beim Übermitteln der Adresse der zumindest einen web-basierten Benutzeroberfläche und/oder beim Übermitteln des Quellcodes mitsamt der zugehörigen graphischen Elemente der zumindest einen web-basierten Benutzeroberfläche an die Auswertungsvorrichtung zumindest ein Betriebssystem und/oder zumindest einen Web-Browser anzugeben, für welches bzw. welchen die Pixelbilder der zumindest einen web-basierten Benutzeroberfläche zu erzeugen sind.

Besonders bevorzugt ist die Eingabeeinrichtung ausgelegt, die Adresse der zumindest einen web-basierten Benutzeroberfläche und/oder den Quellcode mitsamt der zugehörigen graphischen Elemente der zumindest einen web-basierten Benutzeroberfläche an die jeweilige Darstellungsvorrichtung zu übermitteln, die das entsprechende Betriebssystem und/oder den entsprechenden Web-Browser aufweist.

Besonders bevorzugt ist die Eingabeeinrichtung ausgelegt, beim Übermitteln der Adresse der zumindest einen web-basierten Benutzeroberfläche und/oder beim Übermitteln des Quellcodes mitsamt der zugehörigen graphischen Elemente der zumindest einen web-basierten Benutzeroberfläche an die Auswertungsvorrichtung Auflösungen anzugeben, für welche die Pixelbilder der zumindest einen web-basierten Benutzeroberfläche zu erzeugen sind und wobei die Auswertungsvorrichtung ausgelegt ist, die Auflösungen an die jeweilige(n) Darstellungsvorrichtung(en) zu übermitteln.

Computerprogrammprodukt gemäß eines Aspekts der Erfindung

Ein weiterer Aspekt der vorliegenden Erfindung betrifft ein Computerprogrammprodukt, insbesondere auf einem computerlesbaren Medium gespeichert oder als Signal verwirklicht, welches, wenn geladen in einen Computer und ausgeführt von einem Computer, bewirkt, daß der Computer ein erfindungsgemäßes Verfahren durchführt.

Die obigen Ausführungen zu den Aspekten der Erfindung sind nicht auf die jeweiligen Aspekte der Erfindung eingeschränkt. Vielmehr gelten die Ausführungen jeweils sinngemäß für alle Aspekte der Erfindung.

Anhand vorgegebener Adressen von web-basierten Benutzeroberflächen d.h. insbesondere anhand der URL einer Web-Seite als Eingabe bzw. entsprechender Quellcodes können gemäß bevorzugter Ausführungsformen der Erfindung verschiedene Arten von Ausgaben erzeugt werden:

- Für die gegebene URL wird für jede gängige bzw. für eine Vielzahl gängiger Browser Versionen auf einem oder mehreren gängigen Betriebssystem unter einer oder mehrere gängiger Bildschirmauflösungen je ein komplettes Pixelbild, d.h. ein Screenshot der web-basierten Benutzeroberfläche, insbesondere der Web-Seite erzeugt;

- ein Auswertungsbild kann beispielsweise eine visuelle Überlagerung der Erzeugung des Screenshots sein;

- ferner können für jeden Screenshot ein oder mehrere Kennzahlen bzw. Metriken berechnet werden. Beispielsweise können durch einen Vergleich von Kennzahlen mehrerer Screenshots das Aussehen der web-basierten Benutzeroberfläche, insbesondere das Aussehen einer Web-Seite, bei Darstellung in verschiedenen Browsern automatisiert überprüft werden. Die Darstellungen der verschiedenen Web-Browser können z.B. paarweise verglichen werden. Gleiche Kennzahlen aus mehreren Screenshots können auch zu einer Gesamtkennzahl aggregiert werden, welche die Beurteilung von Abweichungen, insbesondere von visuellen Abweichungen, erleichtert.

Hierbei referenziert eine Adresse, d.h. eine URL immer genau ein Artefakt, beispielsweise eine Web-Seite, ein Bild oder andere Dateien.

Kurze Darstellung der Figuren

Bevorzugte Ausführungsformen der vorliegenden Erfindung werden anhand begleitender Figuren beispielhaft beschrieben, wobei einzelne Merkmale der beschriebenen bevorzugten Ausführungsformen beliebig zu weiteren Ausführungsformen miteinander kombiniert werden können. Es zeigt

Figur 1:    Eine schematische Ansicht einer bevorzugten erfindungsgemäßen Datenverarbeitungseinrichtung;
Figur 2:    Eine beispielhafte Darstellung einer Web-Seite;
Figur 3:    Eine beispielhafte Darstellung einer Web-Seite;
Figur 4:    Eine Darstellung einer herkömmlichen Überlagerung der Darstellungen gemäß der Figuren 2 und 3;
Figur 5:    Eine beispielhafte Darstellung einer Überlagerung der Darstellungen gemäß der Figuren 2 und 3 gemäß einer bevorzugten Ausführungsform der vorliegenden Erfindung;
Figur 6:    Eine beispielhafte Darstellung einer Web-Seite;
Figur 7:    Eine beispielhafte Darstellung einer Web-Seite;
Figur 8:    Eine beispielhafte Darstellung einer Überlagerung der Darstellungen gemäß Figuren 6 und 7 gemäß einer bevorzugten Ausführungsform der vorliegenden Erfindung;

Figur 9:      Eine beispielhafte Darstellung einer Überlagerung der Darstellungen gemäß Figuren 6 und 7 durch Differenz;

Figur 10:    Eine beispielhafte Darstellung einer Überlagerung der Darstellungen gemäß Figuren 6 und 7;

Figur 11:    eine schematische Ansicht eines Bestandteils einer bevorzugten Ausführungsform der Erfindung.

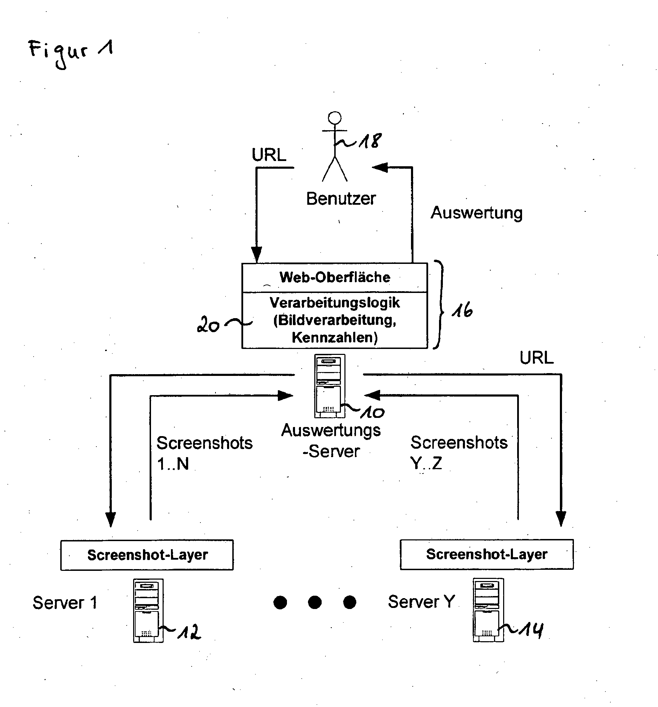

**Figur 1** zeigt schematisch eine bevorzugte Ausführungsform einer Datenverarbeitungseinrichtung 1 mit einem Auswertungsserver 10 als bevorzugter Auswertungsvorrichtung sowie einem Server 12 und einem Server 14 als bevorzugte Darstellungsvorrichtungen. Auf den Server 12 kann beispielsweise ein vorbestimmtes Betriebssystem, wie Linux, Unix, Windows, MacOS, usw. installiert sein und laufen. Ferner kann der Server 12 eine oder mehrere Web-Browser umfassen, beispielsweise einen Internet-Explorer in einer oder verschiedenen Versionen, Firefox, Opera, Mozilla, Netscape, usw., wobei die Web-Browser auch in verschiedenen Versionen installiert sein können. Ferner können die Betriebssysteme und/oder die Web-Browser auf verschiedene Auflösungen eingestellt sein, beispielsweise 1024x768, 1240x1024, usw..

Analog kann auf dem Server 14 ein Betriebssystem laufen, welches sich von dem Betriebssystem des Servers 12 unterscheidet. Das Betriebssystem des Servers kann aber auch identisch mit dem Betriebssystem des Servers 12 sein. Beispielsweise kann auf dem Server 14 Ubuntu Linux, Red Hat Linux, Debian Linux, Windows XP Professional, Windows XP Home, usw. installiert sein. Ferner kann auf dem Server 14 als Web-Browser das Programm KDE Konqueror, Opera, usw. installiert sein.

Ferner kann die Datenverarbeitungseinrichtung 1 weitere zusätzliche Server (nicht gezeigt) umfassen. Auf jedem Server 12, 14 können eine beliebige Anzahl von Screenshots, insbesondere auf der Server 12 1 ... n Screenshots und auf dem Server 14 Y ... Z Screenshots erstellt werden, jeweils beispielsweise unter Verwendung verschiedener Web-Browser und/oder verschiedener Auflösungen.

Die Screenshots können insbesondere dadurch erstellt werden, daß von dem Auswertungsserver 10 eine Web-Adresse, insbesondere eine URL an die jeweiligen Server 12, 14 übergeben wird. Alternativ kann auch ein kompletter Quelltext von dem Auswertungsserver 10 an die Server 12, 14 übergeben werden. Beispielswiese kann anhand einer Eingabe/Ausgabeschnittstelle 16, welche beispielsweise einen Monitor und eine Tastatur bzw. eine Maus, usw. umfassen kann, ein Benutzer 18, eine Web-Adresse insbesondere ein URL an den Auswertungsserver 10 übergeben. Der Auswertungsserver 10 kann die URL an die Server 12, 14 weiterleiten und/oder Bestandteile des Quelltextes und/oder den gesamten Quelltext an die Server 12, 14 übergeben, welche ihrerseits als sogenannte "Screenshot-Layer" die Pixelbilder, d.h. die Screenshots erstellen und diese zumindest teilweise vorzugsweise unbearbeitet zurück an den Auswertungsserver 10 übergeben.

Der Auswertungsserver 10 umfaßt vorzugsweise eine Verarbeitungslogik 20, welche ausgelegt ist, eine Bildverarbeitung durchzuführen, insbesondere die Screenshots beispielsweise paarweise oder alle Screenshots oder einen Teil der Screenshots zu überlagern bzw. Kennzahlen einzelner Screenshots bzw. von Screenshotpaaren zu erstellen. Diese Kennzahlen können über eine Ausgabevorrichtung der Eingabe- /Ausgabeschnittstelle 16 an den Benutzer 18 ausgegeben werden. Ferner kann die Darstellung der web-basierten Benutzeroberfläche, d.h. ein oder mehrere der entsprechenden Screenshots bzw. Pixelbilder bzw. verarbeiteten Pixelbilder, insbesondere Überlagerungen der Pixelbilder, an den Benutzer 18 anhand des Monitors der Eingabe-/Ausgabe-Schnittstelle 16 ausgegeben werden.

In anderen Worten erlaubt das beispielhaft in Figur 1 skizzierte System bzw. die beispielhaft in Figur 1 skizzierte Datenverarbeitungseinrichtung 1 dem Benutzer 18, anhand einer Web-Oberfläche als Bestandteil der Eingabe-/Ausgabeschnittstelle 16 des Auswertungsservers 10 die URL der zu testenden Web-Seite sowie eventuell weitere Angaben für den visuellen Test, beispielsweise gewünschte Betriebssysteme, gewünschte Web-Browser, gewünschte Auflösungen, usw. einzugeben. Der Auswertungsserver 10 propagiert die Daten zu weiteren Servern 12, 16 die in vorkonfiguierten Umgebungen Screenshots der Web-Seite erstellen und zumindest teilweise an den Auswertungsserver 10 zurückliefern. Dieser analysiert dann die Screenshots und liefert die Auswertungsergebnisse an den Benutzer 18, wobei die Auswertungsergebnisse insbesondere anhand eines Computermonitors, beispielsweise auch über weitere Peripheriegeräte, insbesondere einen Drucker als Bestandteil einer Eingabe-/Ausgabeschnittstelle 16 ausgeben werden.

Die Verarbeitungslogik 20 als Bestandteil des Auswertungsservers 10 berechnet einerseits aus den Screenshots neue Pixelbilder, beispielsweise Überlagerung mehrerer (insbesondere eingefärbter) Screenshots, pixelweise Differenz, etc. Die Verarbeitungslogik 20 kann jedoch auch eine von dem Auswertungsserver 10 losgelöste Logikeinrichtung 20 sein. Beispielsweise kann der Auswertungsserver 10 ein Computerserver sein, welcher beispielsweise über einen zur Verbindung mit einem weiteren Computer verbunden ist, welcher die Verarbeitungslogik 20 umfaßt.

Des weiteren kann die Verarbeitungslogik 20 Kennzahlen für alle Screenshots berechnen. Beispielsweise können hierbei die relativen R-, G-, B-Histogramme von Screenshots miteinander verglichen werden, um unterschiedliche Farbdarstellungen in verschiedenen Farben bzw. verschiedenen Farben entsprechend festzustellen. Die obigen Ausführungen sind nicht auf das RGB-Farbmodell, d.h. auf R-, G-, B-Histogramme beschränkt. Vielmehr ist das RGB-Farbmodell als beispielhaftes Farbmodell beschrieben wurde. Alternativ können auch andere Farbmodelle eingesetzt bzw. verwendet werden, wie z.B. das herkömmliche CMYK-Farbmodell, das herkömmliche CMY-Farbmodell, das herkömmliche HSB-Farbmodell, das herkömmliche HLS-Farbmodell, das herkömmliche YIQ/YUY-Farbmodell und/oder das herkömmliche Lab-Farbmodell.

Insbesondere kann die Entropie der relativen Grauwerthistogramme brauchbare Kennzahlen zum Vergleich verschiedener Screenshots liefern. Insbesondere lassen anhand mit Fourier- oder Wavelet-Methode extrahierte Parameter Aussagen über wiederkehrende Muster auf den Webseiten zu. Wenn beispielsweise in einem Web-Browser ein Hintergrundmuster nicht korrekt dargestellt ist, werden sich einige Parameter im Wert von denen einer korrekt dargestellten Seite unterscheiden.

Zum Generieren der Screenshots können hierbei herkömmliche Programme verwendet werden. ,

Die vorliegende Erfindung ist nicht auf die obige, beispielhafte Darstellung der bevorzugten Ausführungsform beschränkt. Insbesondere kann z.B. ein Cluster von Computern, Rechnern, Workstations, usw. für die Erstellung von Screenshots verwendet werden. Ferner kann die Screenshoterstellung beschleunigt werden, indem beispielsweise Ergebnisse von sogenannten "rendering engines" der Browser im Speicher direkt ausgelesen werden, usw.

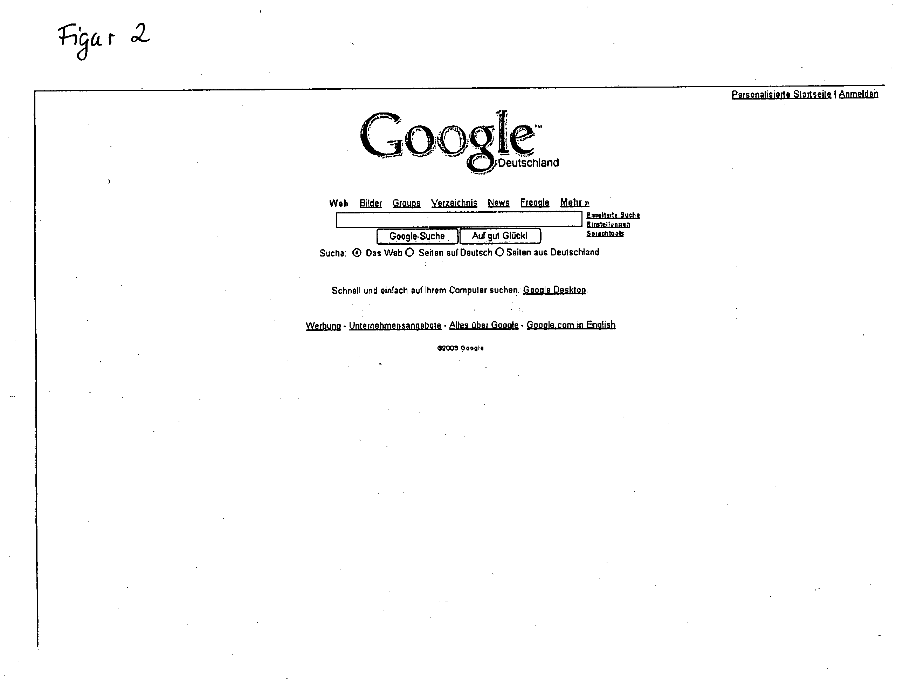

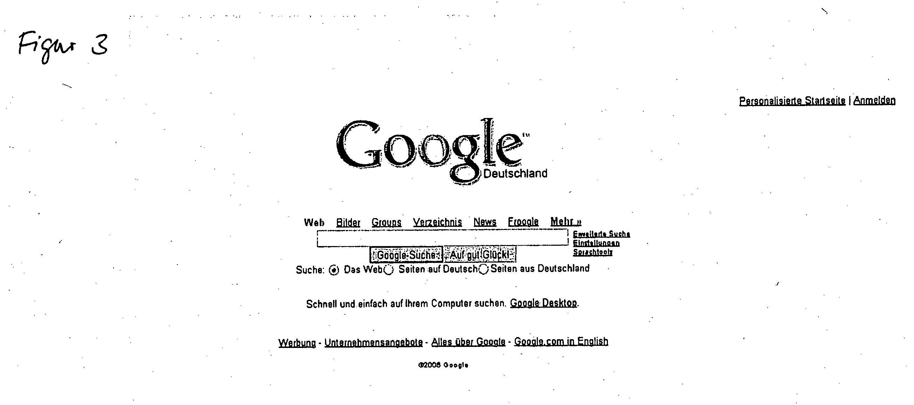

**Figur 2** und **Figur 3** zeigen jeweils eine Darstellung einer Webseite anhand verschiedener Web-Browser jeweils unter dem Betriebssystem Windows XP erstellt. Figur 2 zeigt eine Darstellung der Webseite mit der URL: "HTTP://www.google.de" anhand des Web-Browsers "Internet-Explorer 6". Figur 3 zeigt dieselbe Web-Seite anhand des Web-Browsers "Opera 8.5". Anhand dieser beiden Screenshots sind keine Unterschiede offensichtlich. Das Angeben der URL ist eine beispielhafte Angabe der Adresse der darzustellenden und zu vergleichenden web-basierten Benutzeroberfläche.

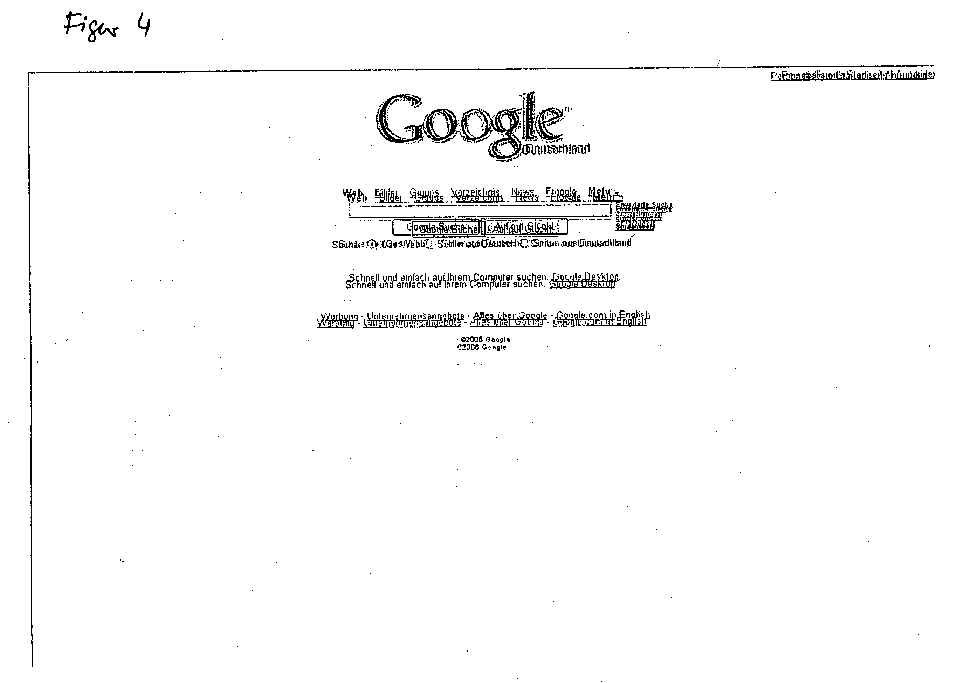

**Figur 4** zeigt eine Überlagerung der beiden Darstellungen von Figur 2 und 3, wobei der Darstellung von Figur 2 die Darstellung von Figur 3 mit 50% Transparenz überlagert wurde.

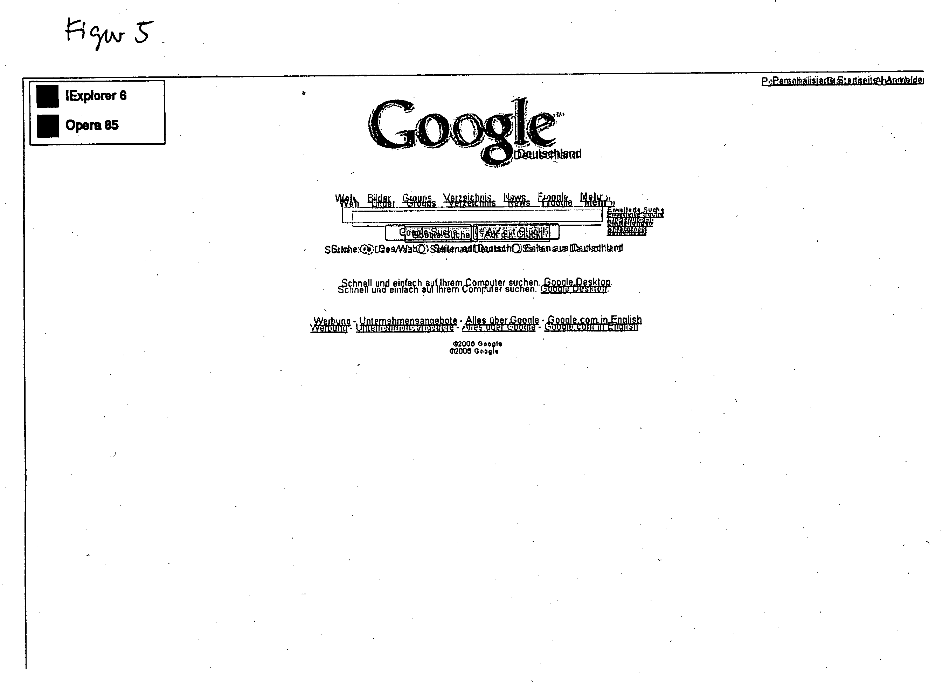

**Figur 5** zeigt eine analoge Darstellung, wobei jedoch gemäß einer bevorzugten Ausführungsform der Erfindung die Screenshots gemäß Figur 2 und Figur 3 vor Überlagerung eingefärbt (in der dargestellten Weise in verschiedenen Grautönen) wurden. Insbesondere im Hinblick auf die Darstellung gemäß Figur 4 ist offensichtlich, daß erfindungsgemäß Unterschiede in den Darstellungen in den beiden Figuren 2 und 3 deutlicher hervortreten, insbesondere werden Übereinstimmungen durch Kombination der Farben Rot und Blau sehr dunkel dargestellt, wohingegen Unterschiede jeweils Rot oder Blau deutlich hervortreten. Im Gegensatz dazu sind in der Darstellung gemäß Figur 4 Unterschiede nicht in einfacher Weise ersichtlich, da diese beispielsweise in beiden Bildern die gleiche Farbe, insbesondere Blau aufweisen.

Zwar wurden die Screenshots gemäß Figuren 2 und 3 zum Erzeugen der Darstellung gemäß Figur 5 vor der Überlagerung eingefärbt. Vorteilhafterweise lassen sich jedoch Unterschiede und Gemeinsamkeiten der einzelnen Darstellungen auch besser erkennen, als bei einer herkömmlichen Überlagerung, wenn das erstellte Ausgabepixelbild, anstatt farbig, als Graustufenbild ausgegeben wird. Folglich ist es nicht notwendig, das Ausgabepixelbild farbig auszugeben, so lange die Verarbeitung der zumindest zwei Pixelbilder zu dem Ausgabepixelbild farbig erfolgt und das Ausgabepixelbild ein Farbbild ist. Die tatsächliche Darstellung des Ausgabepixelbildes, wie es ein Benutzer, beispielsweise ein Web-Designer, betrachtet kann jedoch wieder als Graustufenbild sein, wie es beispielsweise durch drucken des Ausgabepixelbildes an einem einfarbigen Drucker entsteht.

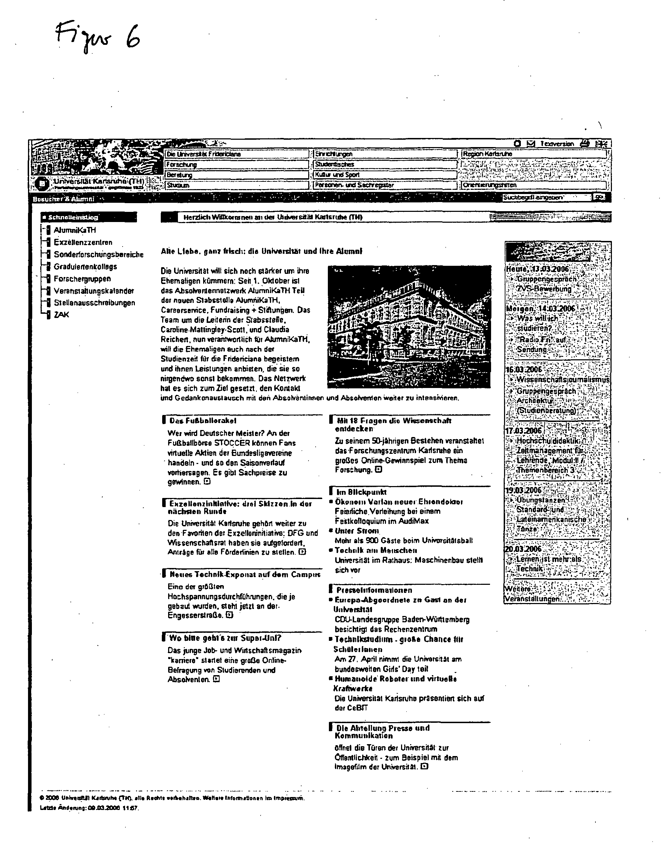

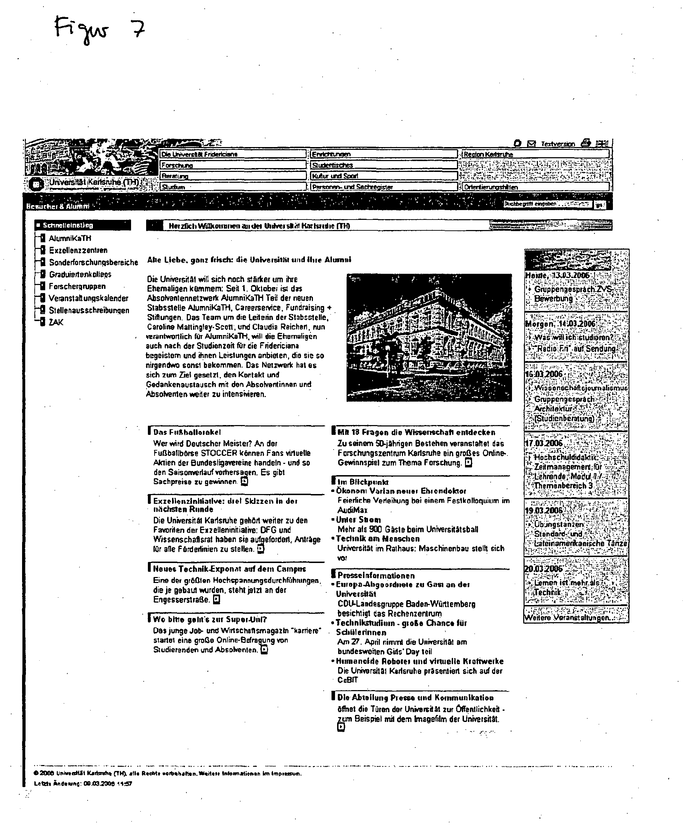

Analog zeigt **Figur 6** eine Darstellung der URL: "HTTP://www.Uni-Karlsruhe.de/besucher/" mit den Web-Browser "MS Internet Explorer 6" unter dem Betriebssystem Windows XP. **Figur 7** zeigt die gleiche Seite bei Darstellung mit dem Web-Browser "Opera 8.5" ebenfalls unter dem Betriebssystem Windows XP.

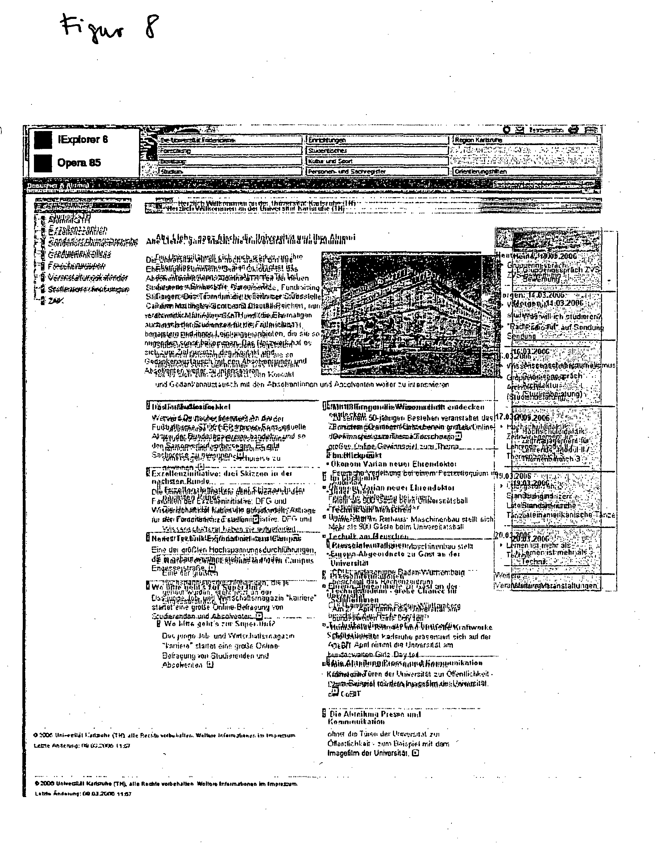

**Figur 8** zeigt eine Darstellung gemäß einer bevorzugten Ausführungsvariante der vorliegenden Erfindung, wobei vor Überlagern der Darstellungen gemäß Figur 6 und Figur 7 die jeweiligen (farbigen) Screenshots Rot bzw. Blau eingefärbt wurden. Die Einfärbung ist in den Figuren in entsprechenden Grautönen dargestellt. Analog zu Figur 5 sind in Figur 8 die Unterschiede und Gemeinsamkeiten deutlich zu erkennen. Ebenso, wie in Figur 5 ist in Figur 8 gekennzeichnet, daß die rote Darstellung anhand des "Internet-Explorers 6" erzeugt wurde und die blaue Darstellung anhand von "Opera 8.5"

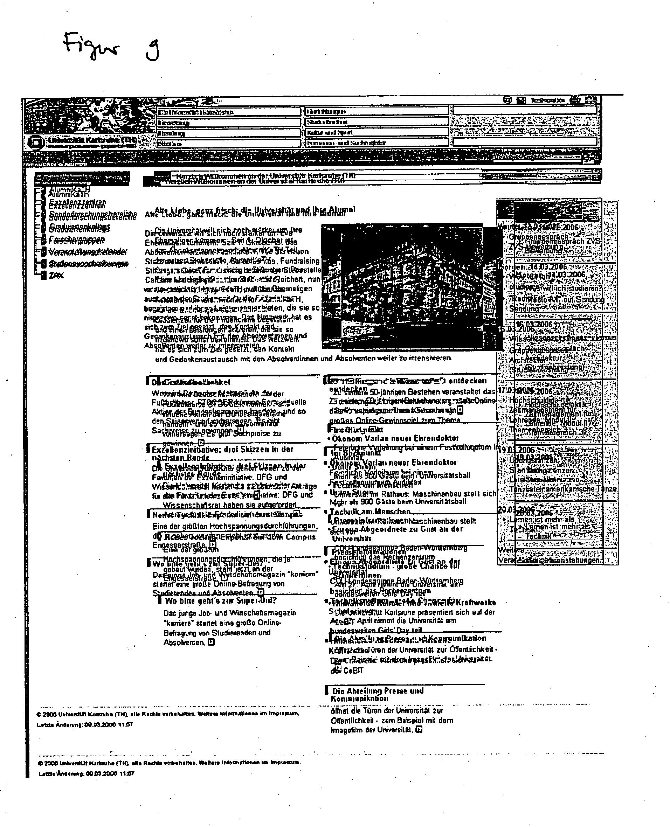

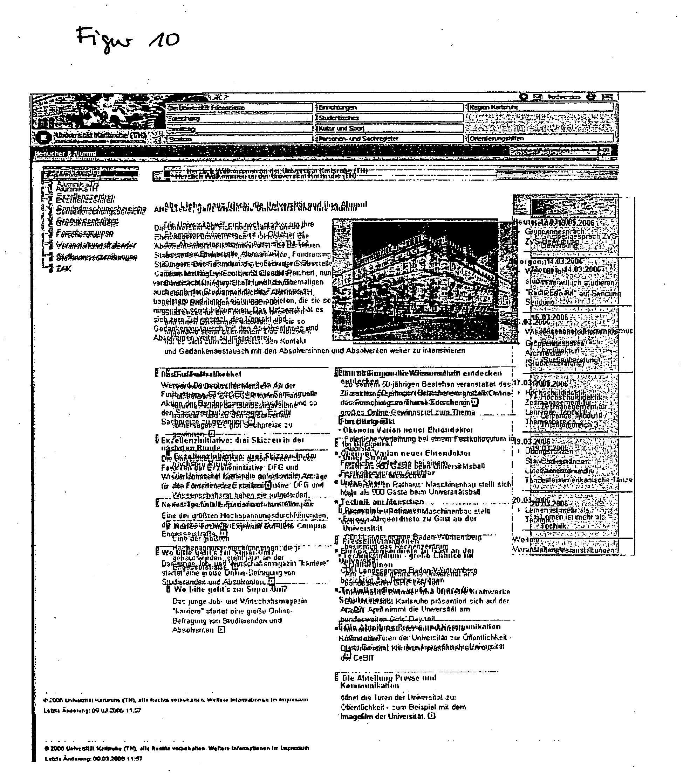

**Figur 9** zeigt eine herkömmliche Überlagerung der Darstellungen gemäß Figuren 6 und 7 durch Differenz. **Figur 10** zeigt eine herkömmliche Überlagerung der Darstellung gemäß Figuren 6 und 7, wobei die Darstellung gemäß Figur 7, 50% Transparenz gegenüber der Darstellung gemäß Figur 6 aufweist. Analog wie in Figur 4 ist aus Figur 10 ersichtlich, daß Gemeinsamkeiten und Unterschiede nicht so eindeutig darstellbar sind, wie gemäß einer bevorzugten Ausführungsvariante der Erfindung, wie in Figur 8 dargestellt. Ebenso ist aus Figur 10 ersichtlich, daß Unterschiede und Gemeinsamkeiten nicht so eindeutig darstellbar sind, wie gemäß der bevorzugten Ausführungsvariante der vorliegenden Erfindung wie in Figur 8 dargestellt.

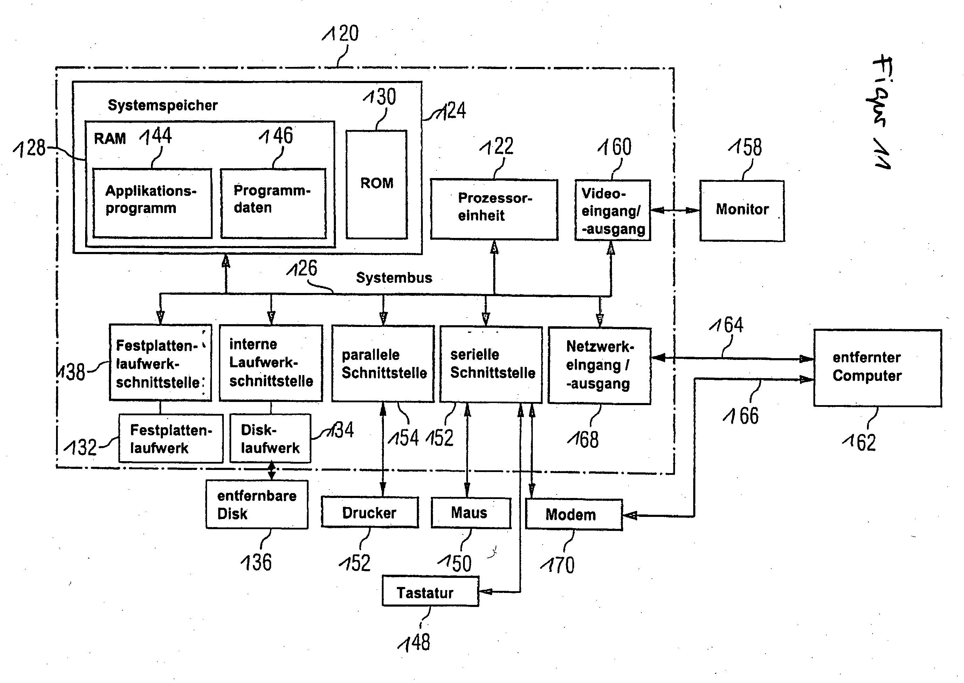

Bezugnehmend auf **Figur 11** wird ein beispielhafter Bestandteil einer bevorzugten Ausführungsform der Erfindung beschrieben, insbesondere, wie beispielsweise ein Auswertungsserver 10 ausgebildet sein kann. Ein Bestandteil einer bevorzugten Ausführungsform der Erfindung umfaßt eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122 verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern.

Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-Sytem (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielshaft beschriebene Umgebung eine Festplatte (nicht gezeigt) und eine externe Disk 142 verwendet, ist für den Fachmann offensichtlich, daß andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw..

Eine Vielzahl von Programm-Modulen, insbesondere ein Betriebssystem (nicht gezeigt) ein oder mehrere Applikationsprogramme 144, oder Programm-Module (nicht gezeigt) und Programmdaten 146, können auf der Festplatte, der externen Disk 142, dem ROM 130 oder dem RAM 128 gespeichert werden. Die Applikationsprogramme können zumindest einen Teil der Funktionalität, wie in Figur 11 gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus bzw. einem Trackball 150 eingeben. Andere Eingabevorrichtungen (nicht gezeigt) können ein Mikrofon und/andere Sensoren, einen Joystick, ein Spielpolster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem Systembus 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Figur 11 stellt die mit einem "remote computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Figur 11 dargestellt sind, umfassen ein "local area network" (LAN) 164 und ein "wide are network" (WAN) 166. Solche Netzwerkumgebungen sind alltäglich in Büros, firmenweiten Computernetzwerken, Intranetzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

**Bezugszeichenliste**

| | |
|---|---|
| 1 | Datenverarbeitungseinrichtung |
| 10 | Auswertungsserver |
| 12 | Server |
| 14 | Server |
| 16 | Eingabe-/Ausgabeschnittstelle |
| 18 | Benutzer |
| 20 | Verarbeitungslogik |
| 120 | Rechnerumgebung |
| 122 | Prozessoreinheit |
| 124 | Systemspeicher |
| 126 | Systembus |
| 128 | random access memory (RAM) |
| 130 | Nur-Lesespeicher (ROM) |
| 132 | Festplattenlaufwerk |
| 134 | Disklaufwerk |
| 136 | entfernbare Disk |
| 138 | Festplattenlaufwerkschnittstelle |
| 140 | Disklaufwerkschnittstelle |
| 142 | externe Disk |
| 144 | Applikationsprogramm |
| 146 | Programmdaten |
| 148 | Tastatur |
| 150 | Computermaus/Trackball |
| 152 | serielle Schnittstelle |
| 154 | parallele Schnittstelle |
| 156 | Drucker |
| 158 | Monitor |
| 160 | Videoeingang/ -ausgang |
| 162 | entfernter Computer |
| 164 | "local area network" (LAN) |
| 166 | "wide are network" (WAN) |
| 168 | Netzwerkeingangl-ausgang |

**Patentansprüche**

1. Verfahren zum Analysieren und/oder Testen zumindest einer Benutzeroberfläche mit den Schritten:

- Übermitteln einer Adresse zumindest einer Benutzeroberfläche und/oder des Quellcodes insbesondere mitsamt der zugehörigen graphischen Elemente zumindest einer web-basierten Benutzeroberfläche an eine Auswertungsvorrichtung (10);
- Übermitteln der Adresse der zumindest einen Benutzeroberfläche und/oder des Quellcodes insbesondere mitsamt der zugehörigen graphischen Elemente der zumindest einen Benutzeroberfläche an zumindest zwei unterschiedlich konfigurierte Darstellungsvorrichtungen (12, 14);
- Generieren zumindest eines Pixelbildes der Benutzeroberfläche auf jeder Darstellungsvorrichtung (12, 14);
- Übermitteln eines jeden generierten Pixelbildes an die Auswertungsvorrichtung (10);
- automatisches Ermitteln und/oder Darstellen zumindest eines Unterschieds zwischen den generierten Pixelbildern der zumindest einen Benutzeroberfläche, wobei
zum Ermitteln und/oder Darstellen des Unterschieds der Pixelbilder eine Bildverarbeitung durchgeführt wird und für jedes Pixelbild zumindest eine Kennzahl ermittelt wird und die zumindest eine Kennzahl eines jeden Pixelbildes mit der zumindest einen Kennzahl der weiteren Pixelbilder verglichen wird.

2. Verfahren nach Anspruch 1, mit den Schritten:

- Erzeugen eines jeden Pixelbildes als Graustufenbild mit M*N Pixeln, wobei für jeden Pixel der Wert der Graustufe zwischen 0 und 255 beträgt;
- Erzeugen eines Grauwerthistogramms $H = (x_0, x_1, ..., x_{255})$ für jedes Pixelbild, wobei der Wert eines jeden Eintrags $x_i$ des Grauwerthistogramms angibt, wie viele Pixel mit dem Grauwert i in jeweiligen Pixelbild vorhanden sind;
- Berechnen eines relativen Grauwerthistogramms **h** = (y₀, y₁, ..., y₂₅₅) = **H** / (M*N) für jedes Pixelbild;

- Berechnen einer Entropie $E = -\sum_{i=0}^{255} y_i * \log_2 y_i$ für jedes Pixelbild

- Ausgeben zumindest einer Ausgabevariable in Abhängigkeit der Entropie eines jeden Pixelbildes.

3. Verfahren nach Anspruch 1 oder 2 mit den Schritten:

- Erzeugen eines jeden Pixelbildes mit M*N Pixeln, wobei für jeden Pixel der Farbwert einer jeden der Farben Rot, Grün und Blau zwischen 0 und 255 beträgt;
- Erzeugen zumindest eines Farbwerthistogramms **Hⱼ** = (x_{j0}, x_{j1}, ..., x_{j255}) für eine Farbe der Farben Rot, Grün und Blau für jedes Pixelbild, wobei der Wert eines jeden Eintrags x_{ji} des Farbwerthistogramms j angibt, wie viele Pixel mit dem Farbwert i der entsprechenden Farbe in dem jeweiligen Pixelbild vorhanden sind;
- Berechnen eines relativen Farbwerthistogramms **hⱼ** = (y_{j0}, y_{j1}, .... y_{j255}) = **Hⱼ** / (M*N) für jedes Pixelbild;

- Berechnen einer Entropie $E_j = -\sum_{i=0}^{255} y_{ji} * \log_2 y_{ji}$ für jedes Pixelbild

- Ausgeben zumindest einer Ausgabevariable in Abhängigkeit der Entropie eines jeden Pixelbildes.

4. Verfahren nach Anspruch 3, wobei das Verfahren für zwei oder drei der Farben Rot, Grün und Blau durchgeführt wird.

5. Verfahren nach einem der Ansprüche 2 bis 4, wobei die Ausgabevariable die Entropie E eines jeden Pixelbildes umfaßt.

6. Verfahren nach einem der Ansprüche 2 bis 4, wobei die Ausgabevariable anhand der Entropie E eines jeden Pixelbildes erstellt wird.

7. Verfahren nach einem der vorangegangenen Ansprüche mit den Schritten:

- Erzeugen zweier Pixelbilder als Graustufenbilder mit M*N Pixeln, wobei für jeden Pixel der Wert der Graustufe zwischen 0 und 255 beträgt;
- Erzeugen eines ersten Grauwerthistogramms H = (x₀, x₁, ..., x₂₅₅) für das erste Pixelbild, wobei der Wert eines jeden Eintrags xᵢ des ersten Grauwerthistogramms H angibt, wie viele Pixel mit dem Grauwert i in dem ersten Pixelbild vorhanden sind;
- Erzeugen eines zweiten Grauwerthistogramms H' = (x'₀, x'₁, ..., x'₂₅₅) für das zweite Pixelbild, wobei der Wert eines jeden Eintrags x'ᵢ des zweiten Grauwerthistogramms H' angibt, wie viele Pixel mit dem Grauwert i in dem zweiten Pixelbild vorhanden sind;
- Berechnen einer Differenzvariable D wobei gilt:

$$D = |H - H'| = \sum_{i=0}^{255} |H[i] - H'[i]|;$$

- Kennzeichnen eines Unterschieds, falls D größer als ein vorbestimmter Schwellwert ist, insbesondere, falls D>0.

8. Verfahren nach einem der vorangegangenen Ansprüche, mit den Schritten:

- Erzeugen zweier Pixelbilder, jeweils als Graustufenbild mit M*N Pixeln, wobei für jeden Pixel der Wert der Graustufe zwischen 0 und 255 beträgt;
- Erzeugen eines ersten Histogramms H = (x₀, x₁, ..., x₂₅₅) für das erste Pixelbild, wobei der Wert eines jeden Eintrags xᵢ des Histogramms H angibt, wie viele Pixel mit dem Grauwert i in dem ersten Pixelbild vorhanden sind;
- Erzeugen eines zweiten Histogramms H' = (x'₀, x'₁, ..., x₂₅₅) für das zweite Pixelbild, wobei der Wert eines jeden Eintrags x'ᵢ des Histogramms H' angibt, wie viele Pixel mit dem Grauwert i in dem zweiten Pixelbild vorhanden sind;

- Berechnen einer Differenzvariable D wobei gilt:

$$D = \left| H - H' \right| = \sum_{i=0}^{255} \left( \left| H[i] - H'[i] \right| \right)^2 ;$$

- Kennzeichnen eines Unterschieds, falls D größer als ein vorbestimmter Schwellwert ist, insbesondere, falls D>0.

9. Verfahren nach einem der vorangegangenen Ansprüche, mit den initialen Schritt:

- Erzeugen eines ersten und eines zweiten Pixelbildes jeweils der Größe M*N Pixel
- Auswählen eines rechteckigen Auswahlbereichs der Größe M/2*N/2 Pixel eines ersten Pixelbildes, wobei ein geometrischer Mittelpunkt des Auswahlbereichs mit einem geometrischen Mittelpunkt des ersten Pixelbildes identisch ist;
- Auswählen eines rechteckigen Auswahlbereichs der Größe M/2*N/2 Pixel eines zweiten Pixelbildes, wobei ein geometrischer Mittelpunkt des Auswahlbereichs mit einem geometrischen Mittelpunkt des zweiten Pixelbildes identisch ist;
- Berechnen einer Farbe eines jeden Pixels des Auswahlbereichs des ersten Pixelbildes;
- Berechnen einer Farbe eines jeden Pixels des Auswahlbereichs des zweiten Pixelbildes;
- Berechnen eines initialen Korrelationskoeffizienten anhand der Farben aller Pixel des Auswahlbereichs des ersten Pixelbildes und anhand der Farben aller Pixel des Auswahlbereichs des zweiten Pixelbildes, wobei dem Auswahlbereich eine Verschieberichtung mit einer Kennzahl 0 zugeordnet ist;
den wiederholt durchgeführten Schritten:
- Auswählen eines weiteren rechteckigen Auswahlbereichs der Größe M/2*N/2 Pixel des zweiten Pixelbildes, wobei der geometrische Mittelpunkt des weiteren rechteckigen Auswahlbereichs des zweiten Pixelbildes gegenüber dem geometrischen Mittelpunkt des zweiten Pixelbildes entlang einer vorbestimmten Verschieberichtung verschoben ist und der Verschieberichtung mit eine Kennzahl zugeordnet ist;
- Berechnen einer Farbe eines jeden Pixels des weiteren Auswahlbereichs des zweiten Pixelbildes;
- Berechnen eines weiteren Korrelationskoeffizienten anhand der Farben aller Pixel des Auswahlbereichs des ersten Pixelbildes und anhand der Farben aller Pixel des weiteren Auswahlbereichs des zweiten Pixelbildes, wobei für bei jedem wiederholt durchgeführten Schritt die Position des geometrischen Mittelpunktes des weiteren rechteckigen Auswahlbereichs des zweiten Pixelbildes von den jeweiligen Positionen des geometrischen Mittelpunktes der vorangegangenen Auswahlbereiche des zweiten Pixelbildes verschieden ist,
und mit dem abschließenden Schritt:
- Ausgeben der Kennzahl der Verschieberichtung des weiteren Auswahlbereichs mit dem größten Korrelationskoeffizienten aus der Menge des initialen Korrelationskoeffizienten und aller weiteren Korrelationskoeffizienten.

10. Verfahren nach Anspruch 9, wobei eine Ecke des M*N Pixel großen zweiten Pixelbildes als Koordinatenursprung ausgewählt wird und ausgehend von der ausgewählten Ecke des zweiten Pixelbildes die Kante der Länge M Pixel des zweiten Pixelbildes eine erste Achse eines Koordinatensystems ist und, ausgehend von der ausgewählten Ecke des zweiten Pixelbildes, die weitere Kante der Länge N Pixel des zweiten Pixelbildes eine zweite Achse des Koordinatensystems ist,
der geometrische Mittelpunkt M/2 Pixel entlang der ersten Achse entfernt vom Koordinatenursprung ist und N/2 Pixel entlang der zweiten Achse entfernt vom Koordinatenursprung ist und
die Verschieberichtung eine von acht Richtungen sein kann, wobei der geometrische Mittelpunkt des weiteren Auswahlbereichs ausgehend vom geometrischen Mittelpunkt des Pixelbildes um

- 0 Pixel entlang der Richtung der ersten Achse und N/4 Pixel entlang der Richtung der zweiten Achse verschoben wird und dieser Richtung die Kennzahl 1 zugeordnet ist;
- M/4 Pixel entlang der Richtung der ersten Achse und N/4 Pixel entlang der Richtung der zweiten Achse verschoben wird und dieser Richtung die Kennzahl 2 zugeordnet ist;
- M/4 Pixel entlang der Richtung der ersten Achse und OPixel entlang der Richtung der zweiten Achse verschoben wird und dieser Richtung die Kennzahl 3 zugeordnet ist;
- M/4 Pixel entlang der Richtung der ersten Achse und N/4 Pixel entgegen der Richtung der zweiten Achse verschoben wird und dieser Richtung die Kennzahl 4 zugeordnet ist;

- 0 Pixel entlang der Richtung der ersten Achse und N/4 Pixel entgegen der Richtung der zweiten Achse verschoben wird und dieser Richtung die Kennzahl 5 zugeordnet ist;

- M/4 Pixel entgegen der Richtung der ersten Achse und N/4 Pixel entgegen der Richtung der zweiten Achse verschoben wird und dieser Richtung die Kennzahl 6 zugeordnet ist;

- M/4 Pixel entgegen der Richtung der ersten Achse und 0Pixel entlang der Richtung der zweiten Achse verschoben wird und dieser Richtung die Kennzahl 7 zugeordnet ist;

- M/4 Pixel entgegen der Richtung der ersten Achse und N/4 Pixel entlang der Richtung der zweiten Achse verschoben wird und dieser Richtung die Kennzahl 8 zugeordnet ist.

**11.** Verfahren nach einem der vorangegangenen Ansprüche, wobei jedes Pixelbild durch die Darstellungsvorrichtung und/oder die Auswertungsvorrichtung gemäß einer vorbestimmten Farbe eingefärbt wird, wobei die vorbestimmte Farbe für alle Pixelbilder verschieden ist und

zum automatischen Ermitteln und/oder Darstellen des Unterschieds der Pixelbilder der zumindest einen Benutzeroberfläche von der Auswertungsvorrichtung ein Ausgabepixelbild ausgegeben wird, welches durch anwenden einer vorgegeben Operation, insbesondere pixelweiser Differenz, auf die einzelnen Pixelbilder erzeugt wird.

**12.** Verfahren nach einem der vorangegangenen Ansprüche, wobei zum automatischen Ermitteln und/oder Darstellen des Unterschieds der P Pixelbilder der zumindest einen Benutzeroberfläche von der Auswertungsvorrichtung ein Ausgabepixelbild ausgegeben wird, wobei

das Ausgabepixelbild aus P einzelnen Pixelbildern derart erzeugt wird, daß für jedes Pixelbild jeweils der Farbwert eines jeden Pixels dieses Pixelbildes gemäß einer vorbestimmten Farbwertänderungsfunktion verändert wird, wobei die Farbwertänderungsfunktion für alle Pixelbilder verschieden sein kannund wobei

gemäß ihrer Position entsprechende Pixel der Pixelbilder anhand einer vorgegeben Operation, insbesondere pixelweiser Differenz, als das entsprechende Pixel des Ausgabepixelbildes miteinander verrechnet werden.

**13.** Verfahren nach Anspruch 11 oder 12, wobei die Operation Vektordifferenz und/oder XOR der R-, G-, B-Werte und/oder Mittelwertbildung umfaßt.

**14.** Datenverarbeitungseinrichtung (1), insbesondere Computersystem, zum Analysieren und/oder Testen zumindest einer Benutzeroberfläche mit:

- einer Eingabeeinrichtung welche zum Eingeben und Übermitteln einer Adresse zumindest einer Benutzeroberfläche und/oder des Quellcodes insbesondere mitsamt der zugehörigen graphischen Elemente zumindest einer Benutzeroberfläche an eine Auswertungsvorrichtung (10) ausgelegt ist;

- einer Auswertungsvorrichtung (10), welche zum Übermitteln der Adresse der zumindest einen Benutzeroberfläche und/oder des Quellcodes insbesondere mitsamt der zugehörigen graphischen Elemente der zumindest einen Benutzeroberfläche an zumindest zwei unterschiedlich konfigurierten Darstellungsvorrichtungen (12, 14) ausgelegt ist;

- zumindest zwei unterschiedlich konfigurierte Darstellungsvorrichtungen(12, 14), welche jeweils zum Generieren zumindest eines Pixelbildes der Benutzeroberfläche ausgelegt sind und welche zum übermitteln eines jeden Pixelbildes an die Auswertungsvorrichtung (10) ausgelegt sind, wobei

- die Auswertungsvorrichtung (10) ferner zum automatischen Ermitteln und/oder Darstellen zumindest eines Unterschieds zwischen den Pixelbildern der zumindest einen Benutzeroberfläche ausgelegt ist, wobei die Auswertungsvorrichtung (10) ausgelegt ist, zum Ermitteln des Unterschieds der Pixelbilder eine Bildverarbeitung durchzuführen und für jedes Pixelbild zumindest eine Kennzahl zu ermitteln und die zumindest eine Kennzahl eines jeden Pixelbildes mit der zumindest einen Kennzahl der weiteren Pixelbilder zu vergleichen.

**15.** Computerprogrammprodukt, welches, wenn geladen in einen Computer und ausgeführt von einem Computer, bewirkt, daß der Computer ein Verfahren nach einem der Ansprüche 1 bis 13 durchführt.

**Claims**

**1.** A method for analyzing and/or testing at least one user interface, comprising the steps of:

- transmitting an address of at least one user interface and/or a source code in particular together with the associated graphical elements of at least one web-based user interface, to an evaluation apparatus (10);

- transmitting the address of the at least one user interface and/or the source code in particular together with the associated graphical elements of the at least one user interface to at least two differently configured presentation apparatuses (12, 14);
- generating at least one pixel image of the user interface on each presentation apparatus (12, 14);
- transmitting each generated pixel image to the evaluation apparatus (10);
- automatically determining and/or representing at least one difference between the generated pixel images of the at least one user interface, wherein

for determining and/or representing the difference of the pixel images, an image processing is performed, and for each pixel image at least one index is determined, and the at least one index of each pixel image is compared to the at least one index of the further pixel images.

2. The method according to claim 1, comprising the steps of:

- creating each pixel image as a gray level image with M*N pixels, wherein the value of the gray level is between 0 and 255 for each pixel;
- creating a gray value histogram H = $(x_0, x_1 x_{255})$ for each pixel image, wherein the value of each entry $x_i$ of the gray value histogram indicates how many pixels with the gray value i are present in the respective pixel image;
- calculating a relative gray value histogram h = $(y_0, y_1, ..., y_{255})$ = H / (M*N) for each pixel image;

- calculating an entropy $E = -\sum_{i=0}^{255} y_i * \log_2 y_i$ for each pixel image;

- outputting at least one output variable depending on the entropy of each pixel image.

3. The method according to claim 1 or 2, comprising the steps of:

- creating each pixel image with M*N pixels, wherein the color value of each of the colors red, green and blue is between 0 and 255 for each pixel;
- creating at least one color value histogram $\mathbf{H_j}$ = $(x_{j0}, x_{j1}, ..., x_{j255})$ for a color of the colors red, green and blue for each pixel image, wherein the value of each entry $x_{ji}$ of the color value histogram $\mathbf{j}$ indicates how many pixels with the color value i of the corresponding color are present in the respective pixel image;
- calculating a relative color value histogram $\mathbf{h_j}$ = $(y_{j0}, y_{j1}, ..., y_{j255})$ = $\mathbf{H_j}$ / (M*N) for each pixel image;

- calculating an entropy $E_j = -\sum_{i=0}^{255} y_{ji} * \log_2 y_{ji}$ for each pixel image;

- outputting at least one output variable depending on the entropy of each pixel image.

4. The method according to claim 3, wherein the method is performed for two or three of the colors red, green and blue.

5. The method according to one of claims 2 to 4, wherein the output variable comprises the entropy E of each pixel image.

6. The method according to one of claims 2 to 4, wherein the output variable is created by means of the entropy E of each pixel image.

7. The method according to one of the preceding claims, comprising the steps of:

- creating two pixel images as gray level images with M*N pixels, wherein the value of the gray level is between 0 and 255 for each pixel;
- creating a first gray value histogram $\mathbf{H}$ = $(x_0, x_1, ..., x_{255})$ for the first pixel image, wherein the value of each entry $x_i$ of the first gray value histogram $\mathbf{H}$ indicates how many pixels with the gray value i are present in the first pixel image;
- creating a second gray value histogram $\mathbf{H'}$ = $(x'_0, x'_1, ..., x'_{255})$ for the second pixel image, wherein the value of each entry $x'_i$ of the second gray value histogram H' indicates how many pixels with the gray value i are present in the second pixel image;
- calculating a difference variable D, wherein:

$$D = \left| H - H' \right| = \sum_{i=0}^{255} \left| H[i] - H'[i] \right|;$$

- marking a difference if D is greater than a predetermined threshold value, in particular if D>0.

8. The method according to one of the preceding claims, comprising the steps of:

- creating two pixel images as gray level images with M*N pixels each, wherein the value of the gray level is between 0 and 255 for each pixel;
- creating a first histogram $H = (x_0, x_1, ..., x_{255})$ for the first pixel image, wherein the value of each entry $x_i$ of the histogram $H$ indicates how many pixels with the gray value i are present in the first pixel image;
- creating a second histogram $H' = (x'_0, x'_1, ..., x'_{255})$ for the second pixel image, wherein the value of each entry $x'_i$ of the histogram $H'$ indicates how many pixels with the gray value i are present in the second pixel image;
- calculating a difference variable D, wherein:

$$D = \left| H - H' \right| = \sum_{i=0}^{255} \left( \left| H[i] - H'[i] \right| \right)^2;$$

- marking a difference if D is greater than a predetermined threshold value, in particular if D>0.

9. The method according to one of the preceding claims, comprising the initial step of:

- creating a first and a second pixel image, each having the size of M*N pixel;
- selecting a rectangular selection area of the size M/2*N/2 pixels of a first pixel image, wherein a geometric center of the selection area is identical with a geometric center of the first pixel image;
- selecting a rectangular selection area of the size M/2*N/2 pixel of a second pixel image, wherein a geometric center of the selection area is identical with a geometric center of the second pixel image;
- calculating a color of each pixel of the selection area of the first pixel image;
- calculating a color of each pixel of the selection area of the second pixel image;
- calculating an initial correlation coefficient by means of the colors of all pixels of the selection area of the first pixel image and by means of the colors of all pixels of the selection area of the second pixel image, wherein the selection area is associated with a shifting direction with an index 0;
the repeatedly performed steps:
- selecting a further rectangular selection area of the size M/2*N/2 pixel of the second pixel image, wherein the geometric center of the further rectangular selection area of the second pixel image is shifted along a predetermined shifting direction with respect to the geometric center of the second pixel image, and the shifting direction is associated with an index;
- calculating a color of each pixel of the further selection area of the second pixel image;
- calculating a further correlation coefficient by means of the colors of all pixels of the selection area of the first pixel image and by means of the colors of all pixels of the further selection area of the second pixel image,
- wherein for each repeatedly performed step, the position of the geometric center of the further rectangular selection area of the second pixel image is different from the respective positions of the geometric center of the previous selection areas of the second pixel image,
and the final step:
- outputting the index of the shifting direction of the further selection area with the largest correlation coefficient from the set of the initial correlation coefficient and all further correlation coefficients.

10. The method according to claim 9, wherein a corner of the M*N-pixel-large second pixel image is selected as a coordinate origin and starting from the selected corner of the second pixel image, the edge of the length of M pixels of the second pixel image is a first axis of a coordinate system and starting from the selected corner of the second pixel image, the further edge of the length of N pixels of the second pixel image is a second axis of the coordinate system, wherein
the geometric center is distant from the coordinate origin by M/2 pixels along the first axis and distant from the coordinate origin by N/2 pixels along the second axis, and
the shifting direction may be one out of eight directions, wherein the geometric center of the further selection area, starting from the geometric center of the pixel image,

- is shifted by 0 pixels along the direction of the first axis and by N/4 pixels along the direction of the second axis, and this direction is associated with the index 1;
- is shifted by M/4 pixels along the direction of the first axis and by N/4 pixels along the direction of the second axis, and this direction is associated with the index 2;
- is shifted by M/4 pixels along the direction of the first axis and by 0 pixels along the direction of the second axis, and this direction is associated with the index 3;
- is shifted by M/4 pixels along the direction of the first axis and by N/4 pixels in the opposite direction of the second axis, and this direction is associated with the index 4;
- is shifted by 0 pixels along the direction of the first axis and by N/4 pixels in the opposite direction of the second axis, and this direction is associated with the index 5;
- is shifted by M/4 pixels in the opposite direction of the first axis and by N/4 pixels in the opposite direction of the second axis, and this direction is associated with the index 6;
- is shifted by M/4 pixels in the opposite direction of the first axis and by 0 pixels along the direction of the second axis, and this direction is associated with the index 7;
- is shifted by M/4 pixels in the opposite direction of the first axis and by N/4 pixels along the direction of the second axis, and this direction is associated with the index 8;

11. The method according to one of the preceding claims, wherein each pixel image is colored according to a predetermined color by the presentation apparatus and/or the evaluation apparatus, wherein the predetermined color is different for all pixel images, and
an output pixel image is output by the evaluation apparatus for automatically determining and/or representing the difference of the pixel images of the at least one user interface, which output pixel image is created by applying a predetermined operation, in particular pixelwise difference, to the individual pixel images.

12. The method according to one of the preceding claims, wherein for automatically determining and/or representing the difference of the P pixel images of the at least one user interface, an output pixel image is output by the evaluation apparatus,
wherein the output pixel image is created from P individual pixel images such that for each pixel image, the color value of each pixel of this pixel image is varied according to a predetermined color value variation function, wherein the color value variation function can be different for all pixel images, and
wherein, according to their position, corresponding pixels of the pixel images are offset against each other by means of a given operation, in particular pixelwise difference, as the corresponding pixel of the output pixel image.

13. The method according to claim 11 or 12, wherein the operation comprises a vector difference and/or XOR of the R, G, B values and/or a mean value formation.

14. A data processing device (1), in particular a computer system, for analyzing and/or testing at least one user interface, comprising:

- an input device adapted for inputting and transmitting an address of at least one web-based user interface and/or the source code together with the associated graphical elements of at least one web-based user interface to an evaluation apparatus (10);
- an evaluation apparatus (10) adapted for transmitting the address of the at least one web-based user interface and/or the source code together with the associated graphical elements of the at least one web-based user interface to at least to differently configured presentation apparatuses (12, 14);
- at least two differently configured presentation apparatuses (12, 14), each being adapted to generate at least one pixel image of the web-based user interface and each being adapted to transmit each pixel image to the evaluation apparatus (10), wherein
- the evaluation apparatus (10) is further adapted to automatically determine and/or represent at least one difference between the pixel images of the at least one web-based user interface, wherein

the evaluation apparatus (10) is adapted to determine the difference of the pixel images by performing an image processing, and by determining, for each pixel image, at least one index, and by comparing the at least one index of each pixel image to the at least one index of the further pixel images.

**15.** A computer program product which, when loaded into a computer and executed by a computer, causes the computer to execute a method according to one of the claims 1 to 13.

**Revendications**

**1.** Procédé pour l'analyse et/ou le test d'au moins une surface utilisateur, comprenant les étapes suivantes :

- transmission à un dispositif d'analyse (10) d'une adresse d'au moins une surface utilisateur et/ou du code source, en particulier avec les éléments graphiques associés d'au moins une surface utilisateur basée sur le web ;
- transmission, à au moins deux dispositifs de représentation (12, 14) configurés différemment, de l'adresse de la surface utilisateur au moins au nombre de un et/ou du code source, en particulier avec les éléments graphiques associés de la surface utilisateur au moins au nombre de un ;
- génération d'au moins une image pixellisée de la surface utilisateur sur chaque dispositif de représentation (12, 14) ;
- transmission de chaque image pixellisée générée au dispositif d'analyse (10) ;
- détermination et/ou représentation automatique d'au moins une différence entre les images pixellisées générées de la surface utilisateur au moins au nombre de un, un traitement d'image étant effectué pour la détermination et/ou représentation de la différence des images pixellisées, et au moins un nombre caractéristique étant déterminé pour chaque image pixellisée, et le nombre caractéristique au moins au nombre de un de chaque image pixellisée étant comparé au nombre caractéristique au moins au nombre de un des autres images pixellisées.

**2.** Procédé selon la revendication 1, comprenant les étapes suivantes :

- production de chaque image pixellisée en tant qu'image à niveaux de gris avec M*N pixels, la valeur du niveau de gris pour chaque pixel étant comprise entre 0 et 255 ;
- production d'un histogramme des valeurs de gris H = ($x_0$, $x_1$, ..., $x_{255}$) pour chaque image pixellisée, la valeur de chaque entrée $x_i$ de l'histogramme des valeurs de gris indiquant combien de pixels ayant la valeur de gris i sont présents dans l'image pixellisée respective ;
- calcul d'un histogramme des valeurs de gris relatif **h** = ($y_0$, $y_1$, ..., $y_{255}$) = **H** / (M*N) pour chaque image pixellisée ;
- calcul d'une entropie $E = -\sum_{i=0}^{255} y_i * \log_2 y_i$ pour chaque image pixellisée
- fourniture d'au moins une variable de sortie en fonction de l'entropie de chaque image pixellisée.

**3.** Procédé selon la revendication 1 ou 2, comprenant les étapes suivantes :

- production de chaque image pixellisée avec M*N pixels, la valeur de couleur de chacune des couleurs rouge, vert et bleu étant, pour chaque pixel, comprise entre 0 et 255 ;
- production d'au moins un histogramme des valeurs de couleur $H_j$ = ($x_{j0}$, $x_{j1}$, ..., $x_{j255}$) pour une couleur parmi les couleurs rouge, vert et bleu pour chaque image pixellisée, la valeur de chaque entrée $x_{ji}$ de l'histogramme des valeurs de couleur j indiquant combien de pixels ayant la valeur de couleur i de la couleur correspondante sont présents dans l'image pixellisée respective ;
- calcul d'un histogramme des valeurs de couleur relatif $h_j$ = ($y_{j0}$, $y_{j1}$, ..., $y_{j255}$) = $H_j$ / (M*N) pour chaque image pixellisée ;
- calcul d'une $E_j = -\sum_{i=0}^{255} y_{ji} * \log_2 y_{ji}$ entropie pour chaque image pixellisée
- fourniture d'au moins une variable de sortie en fonction de l'entropie de chaque image pixellisée.

**4.** Procédé selon la revendication 3, le procédé étant effectué pour deux ou trois des couleurs rouge, vert et bleu.

**5.** Procédé selon une des revendications 2 à 4, la variable de sortie comprenant l'entropie E de chaque image pixellisée.

**6.** Procédé selon une des revendications 2 à 4, la variable de sortie étant établie à l'aide de l'entropie E de chaque image pixellisée.

**7.** Procédé selon une des revendications précédentes, comprenant les étapes suivantes :

- production de deux images pixellisées en tant qu'images à niveaux de gris avec M*N pixels, la valeur du niveau de gris étant, pour chaque pixel, comprise entre 0 et 255 ;
- production d'un premier histogramme des valeurs de gris **H** = ($x_0$, $x_1$, ..., $x_{255}$) pour la première image pixellisée, la valeur de chaque entrée $x_i$ du premier histogramme des valeurs de gris **H** indiquant combien de pixels ayant la valeur de gris i sont présents dans la première image pixellisée ;
- production d'un deuxième histogramme des valeurs de gris **H' =** ($x'_0$, $x'_1$, $x'_{255}$) pour la deuxième image pixellisée, la valeur de chaque entrée $x'_i$ du deuxième histogramme des valeurs de gris **H'** indiquant combien de pixels ayant la valeur de gris i sont présents dans la deuxième image pixellisée ;
- calcul d'une variable de différence D, avec application de la relation suivante :

$$D = |H - H'| = \sum_{i=0}^{255} |H[i] - H'[i]| \; ;$$

- caractérisation d'une différence si D est plus grande qu'une valeur de seuil prédéfinie, en particulier si D>0.

**8.** Procédé selon une des revendications précédentes, comprenant les étapes suivantes:

- production de deux images pixellisées, respectivement en tant qu'image à niveaux de gris avec M*N pixels, la valeur du niveau de gris étant, pour chaque pixel, comprise entre 0 et 255 ;
- production d'un premier histogramme **H** = ($x_0$, $x_1$, ..., $x_{255}$) pour la première image pixellisée, la valeur de chaque entrée $x_i$ de l'histogramme **H** indiquant combien de pixels ayant la valeur de gris i sont présents dans la première image pixellisée ;
- production d'un deuxième histogramme **H' =** ($x'_0$, $x'_1$, ..., $x'_{255}$) pour la deuxième image pixellisée, la valeur de chaque entrée $x'_i$ de l'histogramme **H'** indiquant combien de pixels ayant la valeur de gris i sont présents dans la deuxième image pixellisée ;
- calcul d'une variable de différence D, avec application de la relation suivante :

$$D = |H - H'| = \sum_{i=0}^{255} \left(|H[i] - H'[i]|\right)^2 \; ;$$

- caractérisation d'une différence si D est plus grande qu'une valeur de seuil prédéfinie, en particulier si D>0.

**9.** Procédé selon une des revendications précédentes, comprenant les étapes initiales suivantes :

- production d'une première et d'une deuxième image pixellisée, chacune de la dimension M*N pixels
- sélection d'une plage de sélection rectangulaire de dimension M/2*N/2 pixels d'une première image pixellisée, un point central géométrique de la plage de sélection étant identique à un point central géométrique de la première image pixellisée ;
- sélection d'une plage de sélection rectangulaire de dimension M/2*N/2 pixels d'une deuxième image pixellisée, un point central géométrique de la plage de sélection étant identique à un point central géométrique de la deuxième image pixellisée ;
- calcul d'une couleur de chaque pixel de la plage de sélection de la première image pixellisée ;
- calcul d'une couleur de chaque pixel de la plage de sélection de la deuxième image pixellisée ;
- calcul d'un coefficient de corrélation initial à l'aide des couleurs de tous les pixels de la plage de sélection de la première image pixellisée et à l'aide des couleurs de tous les pixels de la plage de sélection de la deuxième image pixellisée, une direction de déplacement ayant un nombre caractéristique 0 étant affectée à la plage de sélection ; avec les étapes suivantes effectuées de façon répétée :
- sélection d'une autre plage de sélection rectangulaire de dimension M/2*N/2 pixels de la deuxième image pixellisée, le point central géométrique de l'autre plage de sélection rectangulaire de la deuxième image pixellisée étant, par rapport au point central géométrique de la deuxième image pixellisée, déplacé le long d'une direction de déplacement prédéfinie et un nombre caractéristique étant affecté à la direction de déplacement ;
- calcul d'une couleur de chaque pixel de l'autre plage de sélection de la deuxième image pixellisée ;
- calcul d'un autre coefficient de corrélation à l'aide des couleurs de tous les pixels de la plage de sélection de la première image pixellisée et à l'aide des couleurs de tous les pixels de l'autre plage de sélection de la deuxième image pixellisée, la position du point central géométrique de l'autre plage de sélection rectangulaire de la deuxième image pixellisée étant, lors de chaque étape effectuée de façon répétée, différente des positions respectives du point central géométrique des plages de sélection précédentes de la deuxième image pixellisée, et avec l'étape finale suivante :

- fourniture du nombre caractéristique de la direction de déplacement de l'autre plage de sélection avec le coefficient de corrélation le plus élevé parmi la quantité du coefficient de corrélation initial et de tous les autres coefficients de corrélation.

10. Procédé selon la revendication 9, dans lequel un coin de la deuxième image pixellisée de dimension M*N pixels est sélectionné en tant qu'origine des coordonnées et, en partant du coin sélectionné de la deuxième image pixellisée, le bord de longueur M pixels de la deuxième image pixellisée est un premier axe d'un système de coordonnées et, en partant du coin sélectionné de la deuxième image pixellisée, l'autre bord de longueur N pixels de la deuxième image pixellisée est un deuxième axe du système de coordonnées, le point central géométrique est éloigné de l'origine des coordonnées de M/2 pixels le long du premier axe et est éloigné de l'origine des coordonnées de N/2 pixels le long du deuxième axe, et la direction de déplacement peut être une direction parmi huit directions, le point central géométrique de l'autre plage de sélection, en partant du point central géométrique de l'image pixellisée, étant

- déplacé de 0 pixel le long de la direction du premier axe et de N/4 pixels le long de la direction du deuxième axe, et le nombre caractéristique 1 étant affecté à cette direction ;
- déplacé de M/4 pixels le long de la direction du premier axe et de N/4 pixels le long de la direction du deuxième axe, et le nombre caractéristique 2 étant affecté à cette direction ;
- déplacé de M/4 pixels le long de la direction du premier axe et de 0 pixel le long de la direction du deuxième axe, et le nombre caractéristique 3 étant affecté à cette direction ;
- déplacé de M/4 pixels le long de la direction du premier axe et de N/4 pixels à l'opposé de la direction du deuxième axe, et le nombre caractéristique 4 étant affecté à cette direction ;
- déplacé de 0 pixel le long de la direction du premier axe et de N/4 pixels à l'opposé de la direction du deuxième axe, et le nombre caractéristique 5 étant affecté à cette direction ;
- déplacé de M/4 pixels à l'opposé de la direction du premier axe et de N/4 pixels à l'opposé de la direction du deuxième axe, et le nombre caractéristique 6 étant affecté à cette direction ;
- déplacé de M/4 pixels à l'opposé de la direction du premier axe et de 0 pixel le long de la direction du deuxième axe, et le nombre caractéristique 7 étant affecté à cette direction ;
- déplacé de M/4 pixels à l'opposé de la direction du premier axe et de N/4 pixels le long de la direction du deuxième axe, et le nombre caractéristique 8 étant affecté à cette direction.

11. Procédé selon une des revendications précédentes, chaque image pixellisée étant colorée par le dispositif de représentation et/ou le dispositif d'analyse selon une couleur prédéfinie, la couleur prédéfinie étant différente pour toutes les images pixellisées, et une image pixellisée de sortie étant fournie par le dispositif d'analyse pour la détermination et/ou représentation automatique de la différence des images pixellisées de la surface utilisateur au moins au nombre de un, image pixellisée de sortie qui est produite par l'utilisation d'une opération prédéfinie, en particulier une différence par pixels, sur les différentes images pixellisées.

12. Procédé selon une des revendications précédentes, une image pixellisée de sortie étant fournie par le dispositif d'analyse pour la détermination et/ou représentation automatique de la différence des P images pixellisées de la surface utilisateur au moins au nombre de un, l'image pixellisée de sortie étant produite à partir de P images pixellisées individuelles de telle sorte que, pour chaque image pixellisée, la valeur de couleur de chaque pixel de cette image pixellisée est respectivement modifiée selon une fonction prédéfinie de modification de valeur de couleur, la fonction de modification de valeur de couleur pouvant être différente pour toutes les images pixellisées, et des pixels correspondants des images pixellisées étant, selon leur position, calculés les uns avec les autres à l'aide d'une opération prédéfinie, en particulier une différence par pixels, en tant que pixel correspondant de l'image pixellisée de sortie.

13. Procédé selon la revendication 11 ou 12, l'opération comprenant une différence vectorielle et/ou une opération XOR des valeurs R-V-B et/ou la formation d'une valeur moyenne.

14. Dispositif de traitement des données (1), en particulier système informatique, pour l'analyse et/ou le test d'au moins une surface utilisateur, avec :

- un dispositif d'entrée qui est conçu pour l'entrée et la transmission à un dispositif d'analyse (10) d'une adresse d'au moins une surface utilisateur et/ou du code source, en particulier avec les éléments graphiques associés d'au moins une surface utilisateur;
- un dispositif d'analyse (10), qui est conçu pour la transmission, à au moins deux dispositifs de représentation (12, 14) configurés différemment, de l'adresse de la surface utilisateur au moins au nombre de un et/ou du code source, en particulier avec les éléments graphiques associés de la surface utilisateur au moins au nombre de un ;
- au moins deux dispositifs de représentation (12, 14) configurés différemment qui sont conçus respectivement pour la génération d'au moins une image pixellisée de la surface utilisateur, et qui sont conçus pour la transmission de chaque image pixellisée au dispositif d'analyse (10),
- le dispositif d'analyse (10) étant également conçu pour la détermination et/ou représentation automatique d'au moins une différence entre les images pixellisées de la surface utilisateur au moins au nombre de un,

le dispositif d'analyse (10) étant conçu pour effectuer un traitement d'image pour la détermination de la différence des images pixellisées et pour déterminer au moins un nombre caractéristique pour chaque image pixellisée, et pour comparer le nombre caractéristique au moins au nombre de un de chaque image pixellisée avec le nombre caractéristique au moins au nombre de un des autres images pixellisées.

**15.** Produit de programme informatique qui, quand il est chargé dans un ordinateur et exécuté par un ordinateur, amène l'ordinateur à réaliser un procédé selon une des revendications 1 à 13.

EP 2 050 023 B1

Figur 1

URL

Benutzer ~18

Auswertung

Web-Oberfläche

Verarbeitungslogik
(Bildverarbeitung,
Kennzahlen)

20 ~

} 16

Auswertungs
-Server

~10

URL

Screenshots
1..N

Screenshots
Y..Z

Screenshot-Layer

Server 1

~12

● ● ●

Screenshot-Layer

Server Y

~14

Figur 2

# Google™
### Deutschland

Web  Bilder  Groups  Verzeichnis  News  Froogle  Mehr »

Erweiterte Suche
Einstellungen
Sprachtools

Google-Suche    Auf gut Glück!

Suche: ⊙ Das Web ○ Seiten auf Deutsch ○ Seiten aus Deutschland

Schnell und einfach auf Ihrem Computer suchen. Google Desktop.

Werbung · Unternehmensangebote · Alles über Google · Google.com in English

©2006 Google

EP 2 050 023 B1

Figur 3

# Google Deutschland

Web    Bilder    Groups    Verzeichnis    News    Froogle    Mehr »

Erweiterte Suche
Einstellungen
Sprachtools

Google-Suche    Auf gut Glück!

Suche: ⊙ Das Web ○ Seiten auf Deutsch ○ Seiten aus Deutschland

Schnell und einfach auf Ihrem Computer suchen. Google Desktop.

Werbung - Unternehmensangebote - Alles über Google - Google.com in English

©2006 Google

Figur 4

EP 2 050 023 B1

Figur 5

EP 2 050 023 B1

Figur 6

Figur 7

Figur 8

Figur 9

Figur 10

Figur 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030061283 A1
- US 6907546 B1
- EP 1569122 A2